# EUROPEAN PATENT SPECIFICATION

(11) **EP 3 680 770 B1**
(45) Date of publication and mention of the grant of the patent: **20.03.2024**
(21) Application number: 17926726.5
(22) Date of filing: 30.09.2017
(51) Int. Cl.: G06F 3/0483, G06F 3/04817, G06F 3/04883, G06F 3/0486, G06F 3/0488, G06F 3/0484

(54) **METHOD FOR EDITING MAIN SCREEN, GRAPHICAL USER INTERFACE AND ELECTRONIC DEVICE**
VERFAHREN ZUR BEARBEITUNG EINES HAUPTBILDSCHIRMS, GRAFISCHE BENUTZEROBERFLÄCHE UND ELEKTRONISCHE VORRICHTUNG
PROCÉDÉ DE MODIFICATION D'UN ÉCRAN PRINCIPAL, INTERFACE GRAPHIQUE D'UTILISATEUR ET DISPOSITIF ÉLECTRONIQUE

(43) Date of publication of application: 15.07.2020
(73) Proprietor: Huawei Technologies Co., Ltd., Longgang District Shenzhen, Guangdong 518129 (CN)
(72) Inventor: WANG, Chao, Shenzhen Guangdong 518129 (CN)
(74) Representative: Gill Jennings & Every LLP
(86) International application number: PCT/CN2017/105161
(87) International publication number: WO 2019/061541

(56) References cited:
- EP-A1- 2 955 616
- AU-B2- 2010 350 739
- CN-A- 102 439 558
- CN-A- 103 543 904
- CN-A- 103 677 627
- CN-A- 104 035 671
- CN-A- 106 250 017
- CN-B- 102 236 513
- US-A1- 2010 058 214
- US-A1- 2010 295 789
- CityMac Learning: "How to rearrange iOS Home Screen", , 5 April 2016 (2016-04-05), pages 1-2, XP054980757, Retrieved from the Internet: URL:https://www.youtube.com/watch?v=jPbRWe z1wOc [retrieved on 2020-08-07]

## Description

### TECHNICAL FIELD

This application relates to the field of man-machine interaction, and in particular, to a home screen editing method, a graphical user interface, and an electronic device.

### BACKGROUND

In recent years, with rapid development of a screen touch technology, electronic devices using touchscreens (such as a mobile phone and a tablet computer) have been widely used. To improve user experience, sizes of the touchscreens of the electronic devices are becoming increasingly large, so that users may browse more information on larger screens. In addition, to edit an icon on a screen (for example, to move an icon to another screen), in the prior art, for example, in a disclosed patent CN101763270 A, a user performs a touch-and-hold operation on the icon on the screen by using a finger and drags the icon across a boundary between the current screen and the another screen, to move the icon to the another screen for display. It can be learned that a prior-art interaction solution for performing an icon moving operation on a screen is quite complicated, decreasing efficiency of intelligent interaction between an electronic device and the user.

US2010/0295789 A1 discloses a method and a related mobile device for editing various menu pages selectively used for a home screen. In response to a given input signal, the mobile device outputs a page edit screen including multiple pages. Then, in response to a user touching an icon on one page and then dragging it to a desired position in another page, the mobile device moves the icon between pages.

CN103543904 A discloses a method and a device for moving an application program icon to a target position in one of a plurality of home screen pages in a split screen.

AU2010350739 describes multifunction device which displays a plurality of selectable user interface objects on the display. In response to detecting the first input, the device moves a first obj ect in the plurality of selectable user interface objects across the display to a location on the display that is proximate to a second object in the plurality of selectable user interface objects. In response to detecting that the first input meets predefined folder-creation criteria while the first object is proximate to the second object, the device creates a folder that contains the first object and the second object. CityMac Learning: "How to rearrange iOS Home Screen", describes how to rearrange icons on a home screen.
US2010/0058214 describes a method for performing a drag and drop operation on a GUI.

### SUMMARY

The present invention is defined by the appended claims. Embodiments not falling within the scope of the claims are exemplary only. To resolve the foregoing technical problem, the invention provides a home screen editing method, and an electronic device, so as to enhance a man-machine interaction capability of an electronic device, increase processing efficiency of the electronic device, simplify an operation step of a user, and also improve user experience.

According to a first aspect, this application provides a home screen editing method, where the method may be implemented in an electronic device with a touchscreen, and the method includes: detecting, by the electronic device, input of a user; in response to the input, displaying a first page of a home screen and a first home screen indicator in a first region of the touchscreen, and displaying a second page of the home screen and a second home screen indicator in a second region of the touchscreen, where the first home screen indicator is used to indicate a position of the first page on the home screen, the second home screen indicator is used to indicate a position of the second page on the home screen, and the home screen indicators are displayed in both the first region and the second region, indicating that a different page of the home screen may be displayed in the first region or the second region through a user operation (for example, a flick gesture);
detecting, by the electronic device, a first touch event, where the first touch event is a gesture specific to a first application icon on the first page; and moving, by the electronic device in response to the first touch event, the first application icon to the second page, and arranging the first application icon on the second page. According to the foregoing technical solution, the electronic device may display two different (or identical) pages of the home screen on one graphical user interface. Therefore, the user may perform an editing operation (such as moving or deletion) on a control (such as an app icon, a widget, or a folder icon) on a page between the pages, thereby improving processing efficiency of the electronic device, and also improving user experience of editing the home screen.

In a possible implementation, the method may further include: displaying, on the touchscreen, a control used for exiting home screen editing; detecting, by the electronic device, a second touch event specific to the control; and in response to the second touch event, skipping displaying the first page and the second page on the touchscreen. In this implementation, the electronic device provides the control used for exiting home screen editing at any time. This can reduce operation complexity of the electronic device, and improve operation efficiency.

In a possible implementation, the control may be displayed at a position near the first application icon. Therefore, after finishing moving the first application icon, the user quickly exits a home screen editing screen conveniently, further increasing use efficiency of the electronic device.

In another possible implementation, the first touch event may include a touch-and-hold gesture specific to the first application icon and a flick gesture from the first region to the second region; and correspondingly, the moving, by the electronic device in response to the first touch event, the first application icon to the second page may specifically include: in response to the touch-and-hold gesture, scaling down the first page and scaling up the second page at the same time; and in response to the flick gesture, moving, by the electronic device, the first application icon to the second page, and arranging the first application icon on the second page. In this implementation solution, a prompt is provided to the user visually, so that the user may be guided to perform a subsequent operation. In this way, a capability of interaction between the electronic device and the user becomes more intelligent and more efficient.

In a possible implementation, the arranging the first application icon on the second page may specifically include: if the first application icon overlaps a second application icon on the second page, creating and displaying, by the electronic device, a folder icon, where the folder icon includes a scaled-down first application icon and a scaled-down second application icon.

In another possible implementation, the foregoing method may further include: detecting, by the electronic device, a third touch event in the first region; and in response to the third touch event, displaying a third page of the home screen in the first region, and displaying the second page in the second region. In other words, a touch event (for example, a flick gesture) specific to the first region and performed by the user may cause a page change in the first region. For example, a page 1 of the home screen is initially displayed in the first region. In response to the flick gesture, a page displayed in the first region changes to a page 2, and the initially displayed page 1 is no longer displayed. However, at this time, the second page in the second region is not affected, and the initially displayed second page is still displayed.

In another possible implementation, in response to the first touch event, the first app icon is scaled up, the first page in the first region is scaled down, and in addition, the second page in the second region is scaled up. This facilitates a moving operation of the user.

In a possible implementation, a size of the first page and a size of the second page may be the same or different. The first page and the second page may alternatively be distinguished by using colors.

According to a second aspect, this application provides an electronic device, including a touchscreen, one or more processors, a memory, a plurality of applications, and one or more computer programs, where the touchscreen includes a touch-sensitive surface and a display, the one or more computer programs are stored in the memory, the one or more computer programs include an instruction, and when the instruction is executed by the electronic device, the electronic device is enabled to perform the foregoing method.

According to a third aspect, this application provides a graphical user interface, where the graphical user interface is stored in an electronic device, the electronic device includes a touchscreen, a memory, and one or more processors, the one or more processors are configured to execute one or more computer programs stored in the memory, and the graphical user interface may include:
in response to input of a user, displaying a first page of a home screen and a first home screen indicator in a first region of the touchscreen, and displaying a second page of the home screen and a second home screen indicator in a second region of the touchscreen, where the first home screen indicator is used to indicate a position of the first page on the home screen, and the second home screen indicator is used to indicate a position of the second page on the home screen; and
moving, by the electronic device in response to a first touch event, a first application icon to the second page, and arranging the first application icon on the second page.

According to the foregoing technical solution, the electronic device may display two different (or identical) pages of the home screen on one graphical user interface. Therefore, the user may perform an editing operation (such as moving or deletion) on a control (such as an app icon, a widget, or a folder icon) on a page between the pages, thereby improving processing efficiency of the electronic device, and also improving user experience of editing the home screen.

In a possible implementation, the graphical user interface may further include: displaying, on the touchscreen, a control used for exiting home screen editing; and in response to a second touch event specific to the control and detected by the electronic device, skipping displaying the first page and the second page on the touchscreen.

In another possible implementation, the graphical user interface may further include: in response to a third touch event, displaying a third page of the home screen in the first region, and displaying the second page in the second region, where the third touch event is a flick gesture, detected by the electronic device, in the first region.

In another possible implementation, in response to the first touch event, the first application icon may be scaled up, and at the same time, the first page may be scaled down, and the second page is scaled up.

In another possible implementation, the foregoing control may be displayed at a position near the first application icon. Therefore, after finishing moving the first application icon, the user quickly exits a home screen editing screen conveniently, further increasing use efficiency of the electronic device.

According to a fourth aspect, this application provides a home screen editing method. The method may be implemented in an electronic device with a touchscreen, and includes:
detecting, by the electronic device, input of a user on the touchscreen;
in response to the input, displaying a first page of a home screen and a first home screen indicator in a first region of the touchscreen, displaying a second page of the home screen and a second home screen indicator in a second region of the touchscreen, and further displaying, on the touchscreen, a control used for exiting home screen editing, where the first home screen indicator is used to indicate a position of the first page on the home screen, and the second home screen indicator is used to indicate a position of the second page on the home screen;
detecting, by the electronic device, a touch-and-hold gesture specific to a first application icon on the first page;
in response to the touch-and-hold gesture, scaling up the first application icon, scaling down the first page, and scaling up the second page;
detecting, by the electronic device, a flick gesture specific to the first application icon, where the flick gesture is from the first region to the second region;
in response to the flick gesture, determining, by the electronic device, whether there is a blank space on the second page to arrange the first application icon; and
when the electronic device determines that there is a blank space on the second page, arranging, by the electronic device, the first application icon on the second page, and restoring the first page and the second page to an initial size; or when the electronic device determines that there is no blank space on the second page, arranging, by the electronic device, the first application icon at a last position on the second page, skipping displaying, on the second page, a third application icon that is originally displayed at the last position, and restoring the first page and the second page to an initial size.

According to a fifth aspect, an embodiment of this application further provides an apparatus for editing a home screen. The apparatus has a function for implementing behavior of the electronic device in the foregoing method embodiments. The function may be implemented by hardware, or may be implemented by executing corresponding software by hardware. The hardware or the software includes one or more modules corresponding to the foregoing function.

According to a sixth aspect, this application further provides a computer-readable storage medium. The computer-readable storage medium stores an instruction. When the instruction is run on a computer, the computer is enabled to perform the method according to the foregoing aspects.

According to a seventh aspect, this application further provides a computer program product including an instruction. When the computer program product is run on a computer, the computer is enabled to perform the method according to the foregoing aspects.

These aspects and other aspects of this application are more concise and comprehensible in descriptions of the following embodiments.

It should be understood that descriptions of technical features, technical solutions, beneficial effects, or similar words in this application do not imply that all features and advantages may be implemented in any individual embodiment. On the contrary, it can be understood that descriptions of features or beneficial effects mean inclusion of a specific technical feature, technical solution, or beneficial effect in at least one embodiment. Therefore, the descriptions of the technical features, the technical solutions, or the beneficial effects in this specification may not necessarily belong to one embodiment. Further, the technical features, the technical solutions, and the beneficial effects described in the embodiments may be combined in any proper manner. A person skilled in the art understands that an embodiment may be implemented without one or more specific technical features, technical solutions, or beneficial effects in a specific embodiment. In other embodiments, an extra technical feature and beneficial effect may be further identified in a specific embodiment that does not embody all embodiments.

### BRIEF DESCRIPTION OF DRAWINGS

FIG. 1 is a schematic diagram of a hardware structure of a tablet computer 100 according to some embodiments;
FIG. 2A to FIG. 2C are schematic diagrams of graphical user interfaces of various pages of a home screen according to some embodiments;
FIG. 3A to FIG. 3C are schematic diagrams of some graphical user interfaces displayed on an electronic device according to some embodiments;
FIG. 4A to FIG. 4E are schematic diagrams of some other graphical user interfaces displayed on an electronic device according to some embodiments;
FIG. 5A to FIG. 5C are schematic diagrams of some other graphical user interfaces displayed on an electronic device according to some embodiments;
FIG. 6A to FIG. 6C are schematic diagrams of some graphical user interfaces displayed on an electronic device according to some other embodiments;
FIG. 7A to FIG. 7D are schematic diagrams of some graphical user interfaces displayed on an electronic device according to some other embodiments;
FIG. 8A and FIG. 8B are schematic diagrams of some graphical user interfaces displayed on an electronic device according to some other embodiments;
FIG. 9A to FIG. 9C are schematic diagrams of some graphical user interfaces displayed on an electronic device according to some embodiments;
FIG. 10 is a schematic flowchart of a method according to some embodiments;
FIG. 11 is a schematic structural diagram of an electronic device according to some embodiments;
FIG. 12 is a schematic structural diagram of an electronic device according to some other embodiments;
FIG. 13 is a schematic structural diagram of an apparatus for editing a home screen according to some embodiments; and
FIG. 14 is a schematic flowchart of a method according to some other embodiments.

### DESCRIPTION OF EMBODIMENTS

Terms in embodiments of this application are used only for the purpose of describing specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that a term "and/or" used in this application indicates and includes any or all possible combinations of one or more associated listed items.

The following describes an electronic device, a graphical user interface (which may be referred to as a GUI hereinafter) used in such an electronic device, and embodiments used for such an electronic device. In some embodiments of this application, the electronic device may be a portable electronic device, such as a mobile phone, a tablet computer, or a wearable electronic device (for example, a smartwatch) with a wireless communication function, that further includes another function, for example, personal digital assistant and/or music player function(s). An example embodiment of the portable electronic device includes but is not limited to a portable electronic device using iOS^{®}, Android^{®}, Microsoft^{®}, or another operating system. The portable electronic device may alternatively be another portable electronic device, for example, a laptop computer (Laptop) with a touch-sensitive surface (for example, a touch panel). It should be further understood that, in some other embodiments of this application, the electronic device may alternatively be a desktop computer with a touch-sensitive surface (for example, a touch panel), but not a portable electronic device.

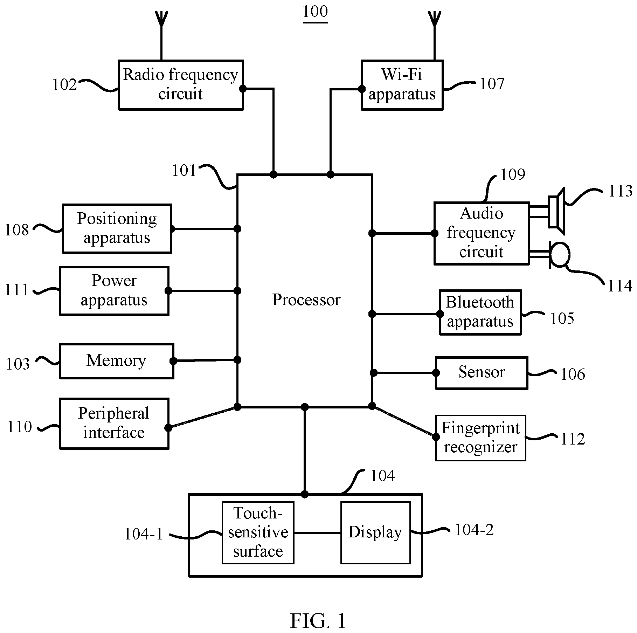

As shown in FIG. 1, an electronic device in an embodiment of this application may be a tablet computer 100. The following uses the tablet computer 100 as an example to specifically describe the embodiment. It should be understood that the tablet computer 100 shown in the figure is merely an example of an electronic device, and the tablet computer 100 may have more or fewer components than those shown in the figure, or may have a combination of two or more components, or may have components disposed in a different manner. Components shown in the figure may be implemented by hardware, including one or more signal processing and/or application-specific integrated circuits, software, or a combination of hardware and software.

As shown in FIG. 1, the tablet computer 100 may specifically include components such as one or more processors 101, a radio frequency (radio frequency, RF) circuit 102, a memory 103, a touchscreen 104, a Bluetooth apparatus 105, one or more sensors 106, a WI-FI apparatus 107, a positioning apparatus 108, an audio frequency circuit 109, a peripheral interface 110, and a power system 111. These components may communicate by using one or more communications bus or signal cables (not shown in FIG. 1). A person skilled in the art may understand that a hardware structure shown in FIG. 1 does not constitute any limitation on the tablet computer 100, and the tablet computer 100 may include more or fewer components than those shown in the figure, or a combination of some components, or components disposed in a different manner.

The following specifically describes the components of the tablet computer 100 with reference to FIG. 1.

The processor 101 is a control center of the tablet computer 100, and is connected to various parts of the tablet computer 100 by using various interfaces and lines. The processor 101 runs or executes an application (Application, App for short) stored in the memory 103 and invokes data and an instruction that are stored in the memory 103, to perform various functions of the tablet computer 100 and process data. In some embodiments, the processor 101 may include one or more processing units. The processor 101 may further integrate an application processor and a modem processor. The application processor mainly processes an operating system, a user interface, an application, and the like. The modem processor mainly processes wireless communication. It can be understood that the modem processor may alternatively not be integrated into the processor 101. For example, the processor 101 may be a Kirin 960 chip manufactured by Huawei Technologies Co., Ltd. In some other embodiments of this application, the processor 101 may further include a fingerprint verification chip, configured to verify a collected fingerprint.

The radio frequency circuit 102 may be configured to send and receive a radio signal in an information sending and receiving process or in a call process. Specifically, the radio frequency circuit 102 may receive downlink data of a base station, and then send the downlink data to the processor 101 for processing; and in addition, send related uplink data to the base station. Usually, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. The wireless communication may use any communication standard or protocol, including but not limited to a global system for mobile communications, a general packet radio service, code division multiple access, wideband code division multiple access, long term evolution, an email, a short message service, or the like.

The memory 103 is configured to store the application and the data. The processor 101 runs the application and the data that are stored in the memory 103, to perform the various functions of the tablet computer 100 and process the data. The memory 103 mainly includes a program storage area and a data storage area. The program storage area may store an operating system, and an application that is required by at least one function (such as a voice playback function and an image playback function). The data storage area may store data (such as audio data and a phone book) that is created based on use of the tablet computer 100. In addition, the memory 103 may include a high-speed random access memory, and may further include a nonvolatile memory such as a magnetic disk storage device or a flash memory device, another volatile solid-state storage device, or the like. The memory 103 may store various operating systems, such as an IOS^{®} operating system developed by Apple Inc., and an ANDROID^{®} operating system developed by Google Inc.

The touchscreen 104 may include a touch-sensitive surface 104-1 and a display 104-2. The touch-sensitive surface 104-1 (for example, a touch panel) may collect a touch event performed by a user of the tablet computer 100 on or near the tablet computer 100 (for example, an operation performed on the touch-sensitive surface 104-1 or near the touch-sensitive surface 104-1 by the user by using a finger, a stylus, or any other suitable object), and send collected touch information to another component such as the processor 101. A touch event performed by the user near the touch-sensitive surface 104-1 may be referred to as a floating touch. The floating touch may mean that the user does not need to directly touch the touch panel to select, move, or drag a target (for example, an icon), and the user merely needs to be located near an electronic device to perform a desired function. In a floating touch application scenario, terms "touch", "come into contact with", and the like do not imply direct contact with the touchscreen 104, but nearby contact with the touchscreen 104. The floating-touch-capable touch-sensitive surface 104-1 may be implemented by using capacitance, infrared sensing, an ultrasonic wave, or the like. The touch-sensitive surface 104-1 may include two parts: a touch detection apparatus and a touch controller. The touch detection apparatus detects a touch orientation of the user, detects a signal generated by a touch operation, and transmits the signal to the touch controller. The touch controller receives touch information from the touch detection apparatus, converts the touch information into touchpoint coordinates, and sends the touchpoint coordinates to the processor 101. The touch controller may further receive an instruction sent by the processor 101, and execute the instruction. In addition, the touch-sensitive surface 104-1 may be implemented in a plurality of types, such as a resistive type, a capacitive type, an infrared type, and a surface acoustic wave type. The display (also referred to as a display screen) 104-2 may be configured to display information input by the user or information provided to the user, and various menus of the tablet computer 100. The display 104-2 may be configured in a form such as a liquid crystal display or an organic light-emitting diode. The touch-sensitive surface 104-1 may cover the display 104-2. After detecting a touch event on or near the touch-sensitive surface 104-1, the touch-sensitive surface 104-1 transmits the touch event to the processor 101 to determine a type of the touch event. Then, the processor 101 may provide corresponding visual output on the display 104-2 based on the type of the touch event. Although the touch-sensitive surface 104-1 and the display screen 104-2 act as two independent components to implement input and output functions of the tablet computer 100 respectively in FIG. 1, the touch-sensitive surface 104-1 and the display screen 104-2 may be integrated to implement the input and output functions of the tablet computer 100 in some embodiments. It can be understood that the touchscreen 104 is formed by stacking a plurality of layers of materials. Only the touch-sensitive surface (layer) and the display screen (layer) are presented in the embodiments of this application, and other layers are not recorded in the embodiments of this application. In addition, in some other embodiments of this application, the touch-sensitive surface 104-1 may cover the display 104-2, and a size of the touch-sensitive surface 104-1 is larger than a size of the display screen 104-2, so that the display screen 104-2 is completely covered by the touch-sensitive surface 104-1. Alternatively, the touch-sensitive surface 104-1 may be disposed in a full-panel form at a front of the tablet computer 100, that is, touches of the user at the front of the tablet computer 100 can be all perceived by the tablet computer, thereby implementing full touch experience at the front of the tablet computer. In some other embodiments, the touch-sensitive surface 104-1 is disposed in the full-panel form at the front of the tablet computer 100, and the display screen 104-2 may also be disposed in the full-panel form at the front of the tablet computer 100, thereby implementing a frameless structure at the front of the tablet computer. In some other embodiments of this application, the touchscreen 104 may further include a series of pressure sensor arrays, and pressure applied by a touch event on the display screen 104-2 or the touch-sensitive surface 104-1 may be sensed on the touchscreen.

In various embodiments of this application, the tablet computer 100 may further have a fingerprint recognition function. For example, a fingerprint recognizer 112 may be disposed at a back (for example, under a rear-facing camera) of the tablet computer 100, or a fingerprint recognizer 112 may be disposed at the front (for example, under the touchscreen 104) of the tablet computer 100. In addition, the fingerprint recognizer 112 may alternatively be disposed in the touchscreen 104 to implement the fingerprint recognition function, that is, the fingerprint recognizer 112 may be integrated with the touchscreen 104 to implement the fingerprint recognition function of the tablet computer 100. In this case, the fingerprint recognizer 112 may be disposed in the touchscreen 104 as part of the touchscreen 104, or may be disposed in the touchscreen 104 in another manner. In addition, the fingerprint recognizer 112 may be further implemented as a full-panel fingerprint recognizer, so the touchscreen 104 may be considered as a panel on which a fingerprint may be collected at any position. The fingerprint recognizer 112 may send a collected fingerprint to the processor 101, so that the processor 101 processes the fingerprint (for example, verify the fingerprint). Amain component of the fingerprint recognizer 112 in this embodiment of this application is a fingerprint sensor. The fingerprint sensor may use any type of sensing technology, including but not limited to an optical, capacitive, piezoelectric, or ultrasonic sensing technology, or the like. In addition, for a specific technical solution of integrating a fingerprint collection component into the touchscreen in this embodiment of this application, refer to Patent Application No. US 2015/0036065 A1 published as US2015/0036065 A1 by the United States Patent and Trademark Office and entitled "FIGNERPRINT SENSOR IN ELECTRONIC DEVICE".

The tablet computer 100 may further include the Bluetooth apparatus 105, configured to implement data exchange between the tablet computer 100 and another electronic device (for example, a mobile phone or a smartwatch) at a short distance. The Bluetooth apparatus in this embodiment of this application may be an integrated circuit, a Bluetooth chip, or the like.

The tablet computer 100 may further include at least one sensor 106, such as a light sensor, a motion sensor, and another sensor. Specifically, the light sensor may include an ambient light sensor and a proximity sensor. The ambient light sensor may adjust luminance of the display of the touchscreen 104 based on brightness of ambient light. The proximity sensor may power off the display when the tablet computer 100 is moved close to an ear. As a type of motion sensor, an accelerometer sensor may detect magnitudes of accelerations in various directions (usually three axes), may detect a magnitude and a direction of gravity when the tablet computer 100 is stationary, and may be used in an application used for recognizing a tablet computer posture (such as landscape-portrait mode switching, a related game, or magnetometer posture calibration), a vibration recognition-related function (such as a pedometer function or tapping), and the like. For another sensor that may be disposed in the tablet computer 100, such as a gyroscope, a barometer, a hygrometer, a thermometer, or an infrared sensor, details are not described herein.

The WI-FI apparatus 107 is configured to provide, for the tablet computer 100, network access in compliance with a WI-FI related standard or protocol. The tablet computer 100 may connect to a WI-FI access point by using the WI-FI apparatus 107, to help the user send and receive emails, browse a web page, access streaming media, and the like. The WI-FI apparatus 107 provides wireless access to the broadband Internet for the user. In some other embodiments, the WI-FI apparatus 107 may alternatively be used as a WI-FI wireless access point, and may provide WI-FI network access for another electronic device.

The positioning apparatus 108 is configured to provide a geographical location for the tablet computer 100. It can be understood that the positioning apparatus 108 may be specifically a receiver of a positioning system, such as a global positioning system (global positioning system, GPS) or a Beidou navigation satellite system. After receiving a geographical location sent by the positioning system, the positioning apparatus 108 sends the information to the processor 101 for processing, or sends the information to the memory 103 for storage. In some other embodiments, the positioning apparatus 108 may be a receiver of an assisted global positioning system (assisted global positioning system, AGPS). The AGPS is a running manner in which GPS positioning is performed with assistance and cooperation. The AGPS may use a base station signal along with a GPS satellite signal to accelerate positioning of the tablet computer 100. In the AGPS system, the positioning apparatus 108 may obtain positioning assistance by communicating with a positioning assistance server (for example, a positioning server for the tablet computer 100). The AGPS system acts as the assistance server to assist the positioning apparatus 108 in completing ranging and positioning services. In this case, the positioning assistance server provides positioning assistance by communicating with the positioning apparatus 108 (that is, a GPS receiver) of the electronic device, for example, the tablet computer 100, through a wireless communications network. In some other embodiments, the positioning apparatus 108 may alternatively be a positioning technology that is based on a WI-FI access point. Each WI-FI access point has a globally unique MAC address. When WI-FI is enabled for the electronic device, the electronic device may scan and collect broadcast signals of surrounding WI-FI access points, and therefore can obtain MAC addresses that are broadcast by the WI-FI access points. The electronic device sends, to a location server through a wireless communications network, data (for example, the MAC addresses) that can identify the WI-FI access points. The location server retrieves a geographical location of each WI-FI access point, computes a geographical location of the electronic device with reference to strength degrees of the WI-FI broadcast signals, and sends the geographical location of the electronic device to the positioning apparatus 108 of the electronic device.

The audio frequency circuit 109, a loudspeaker 113, and a microphone 114 may provide an audio interface between the user and the tablet computer 100. The audio frequency circuit 109 may transmit, to the loudspeaker 113, an electrical signal converted from received audio data, and the loudspeaker 113 converts the electrical signal into a sound signal for output. In addition, the microphone 114 converts a collected sound signal into an electrical signal, and the audio frequency circuit 109 receives the electrical signal, converts the electrical signal into audio data, and then outputs the audio data to the RF circuit 102, to send the audio data to, for example, a mobile phone, or outputs the audio data to the memory 103 for further processing.

The peripheral interface 110 is configured to provide various interfaces for external input/output devices (such as a keyboard, a mouse, an external display, an external memory, and a subscriber identity module card). For example, the peripheral interface 110 is connected to a mouse by using a universal serial bus interface, and is connected, by using a metal contact in a card slot for a subscriber identity module card, to a subscriber identity module (subscriber identity module, SIM) card provided by a telecommunications operator. The peripheral interface 110 may be configured to couple the external input/output devices to the processor 101 and the memory 103.

The tablet computer 100 may further include the power apparatus 111 (such as a battery and a power management chip) that supplies power to various components. The battery may be logically connected to the processor 101 by using the power management chip, so that functions such as charging and discharging management and power consumption management are implemented by using the power apparatus 111.

Although not shown in FIG. 1, the tablet computer 100 may further include cameras (a front-facing camera and a rear-facing camera), a camera flash, a micro-projection apparatus, a near field communication (near field communication, NFC) apparatus, and the like. Details are not described herein.

The following embodiments may be all implemented in an electronic device (for example, the tablet computer 100 or a mobile phone) with the foregoing hardware structure.

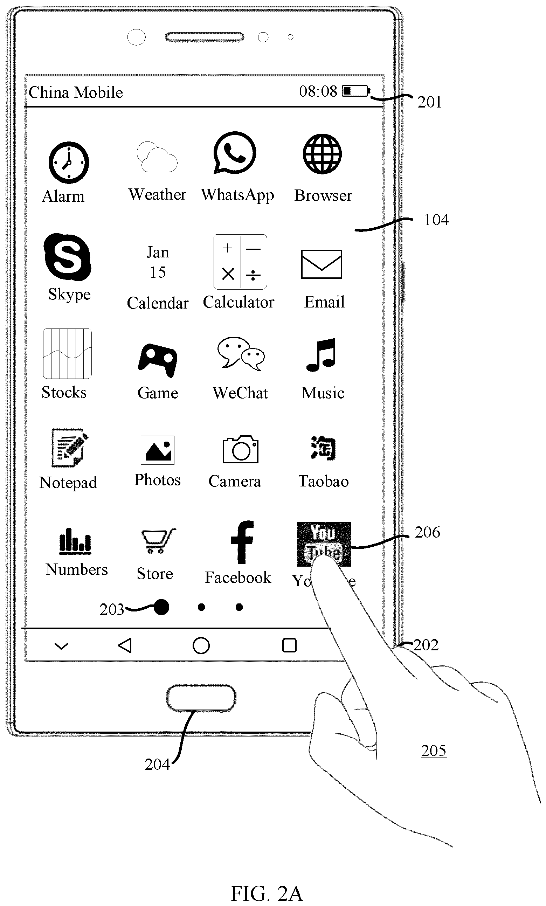

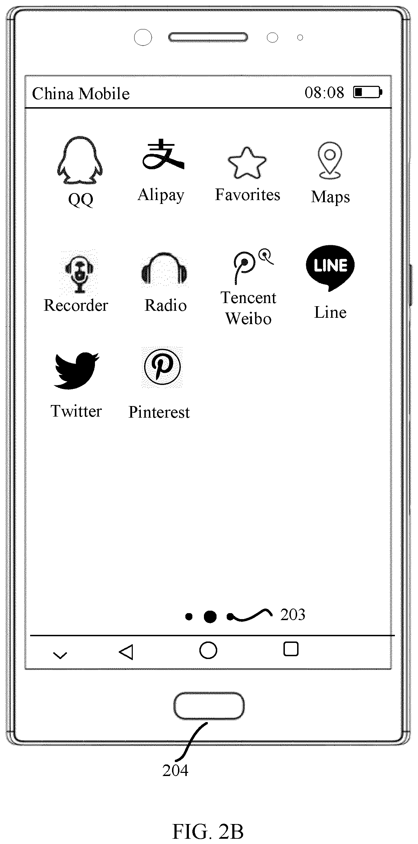

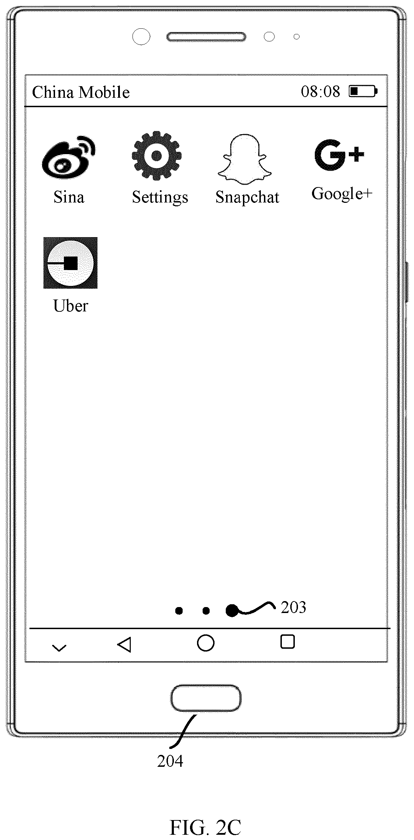

For example, FIG. 2A to FIG. 2C are a series of graphical user interfaces (graphical user interface, GUI) displayed on a touchscreen of an electronic device. These GUIs are of a home screen (Home Screen) of the electronic device. Generally, because a size of the touchscreen of the electronic device is fixed, only a limited quantity of controls can be displayed on the touchscreen of the electronic device. A control is a GUI element. The control is a software component, and is included in an application to control all data processed by the application and interactive operations specific to the data. A user may interact with the control through direction manipulation (direct manipulation), to read or edit related information of the app. Generally, controls may include visual interface elements such as an icon, a button, a menu, a tab, a text box, a dialog box, a status bar, a navigation bar, and a widget. When there are too many controls on the home screen of the electronic device or the user customizes arrangement of the controls on the home screen, the home screen of the electronic device may be divided into a plurality of pages (page). For example, a GUI shown in FIG. 2A may be referred to as a page 1 (Page 1) of the home screen, a GUI shown in FIG. 2B may be referred to as a page 2 (Page 2) of the home screen, and a GUI shown in FIG. 2C may be referred to as a page 3 (Page 3) of the home screen. Each page may include different controls. FIG. 2A is used as an example. The GUI may be the page 1 of the home screen of the electronic device. The page 1 is displayed on the touchscreen of the electronic device, and specifically includes a status bar 201, a navigation bar 202 that may be hidden, a home screen indicator 203, and various icons. The home screen indicator 203 is used to indicate, to the user, which page is specifically a currently displayed page. For example, the page 1 includes five rows and four columns of icons (that is, 20 icons). When a finger of the user (or a stylus, or the like) touches a position on the touchscreen, the electronic device may display, in response to the touch event, a graphical user interface of an app corresponding to an app icon. For example, in FIG. 2A, when a finger 205 of the user taps a position, corresponding to an icon 206, on the touchscreen, YouTube is started, and a specific screen of the app is displayed on the touchscreen. It can be understood that, in some other embodiments, the home screen may further include a dock bar, and the dock bar may include an icon of a commonly used app and the like.

In some other embodiments, as shown in FIG. 2A to FIG. 2C, the electronic device may further include a home screen key 204. The home screen key 204 may be a physical key, or may be a virtual key. The home screen key 204 is used to return, based on an operation of the user, to a page of the home screen from a GUI displayed on the touchscreen, so that the user may conveniently view the home screen at any time, and perform an operation on a control (for example, an icon) on the home screen. The foregoing operation may be specifically pressing the home screen key 204 by the user, or pressing the home screen key 204 twice consecutively by the user in a short time, or pressing and holding the home screen key 204 by the user within a preset time. In some other embodiments of this application, the home screen key 204 may further integrate the fingerprint recognizer 112. Therefore, when the user presses the home screen key 204, the electronic device may collect a fingerprint to confirm an identity of the user.

According to the invention, the electronic device receives input of the user. The input may be a touch operation performed by the user on the touchscreen of the electronic device, or may be a press operation (for example, a press-and-hold operation on the home screen key 204) performed by the user on a physical key of the electronic device. The input may alternatively be voice input. For example, the microphone 114 of an electronic device 100 collects voice of the user, and the voice is processed and converted into voice input. The electronic device 100 may recognize the voice input, and then may execute an instruction corresponding to the voice input. It can be understood that the foregoing input is not specifically limited in this embodiment of this application.

In response to the foregoing input, a GUI used for editing the home screen is displayed on the touchscreen. The GUI includes a first region used for displaying a page a of the home screen, and a second region used for displaying a page b of the home screen. The page a and the page b are pages of the home screen. For example, the first region may display the page 1 (that is, the page a is the page 1) of the home screen, and the second region may display the page 2 (that is, the page b is the page 2) or another page of the home screen. For another example, the first region may display the page 2 (that is, the page a is the page 2) of the home screen, and the second region may display the page 1 (that is, the page b is the page 1) of the home screen. In some other embodiments of this application, the page a and the page b may alternatively be two identical pages of the home screen. For example, both the page a and the page b are the page 1. In some other embodiments of this application, a size of a page displayed in the first region and a size of a page displayed in the second region may be the same or different.

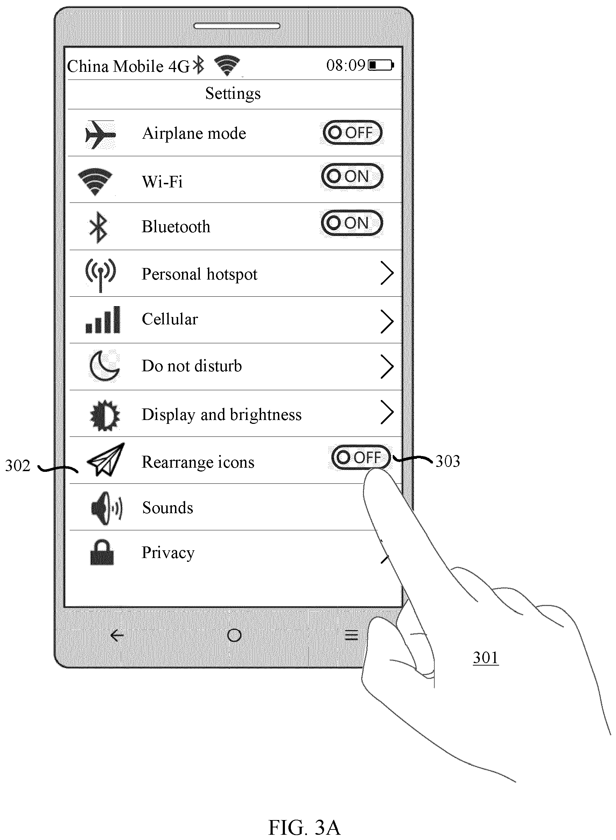

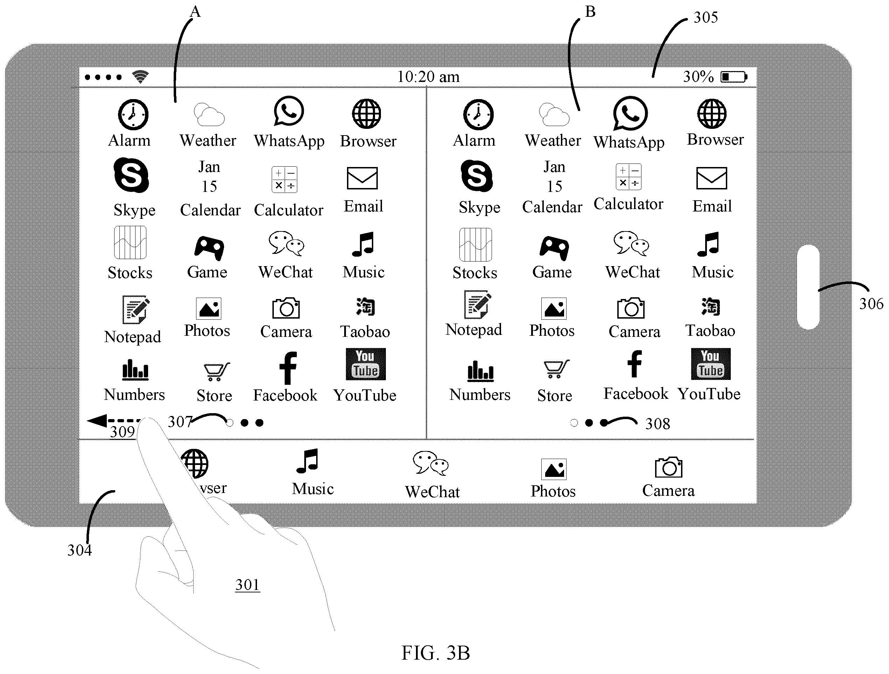

For example, FIG. 3A shows a Settings screen of an electronic device. There is a Rearrange icons submenu 302 on the Settings screen, and there is a control 303 in the submenu 302. When the electronic device detects a touch of a finger 301 of a user on the control 303, a GUI shown in FIG. 3B is displayed on a touchscreen. FIG. 3B shows a GUI for editing a home screen. In some other embodiments of this application, the foregoing input may alternatively be that the finger 301 of the user taps any position of the submenu 302, or may be that the finger 301 of the user presses a position, corresponding to the submenu 302, on the touchscreen until a threshold is exceeded, or the like. It can be understood that the foregoing input is not specifically limited in this embodiment of this application.

In some embodiments of this application, the first region and the second region may not overlap in terms of a display effect, so that the user may conveniently perform different operations on the two regions, improving efficiency of interaction between the electronic device and the user. In some other embodiments of this application, the first region and the second region may alternatively overlap partially in terms of a display effect. In some other embodiments of this application, the first region and the second region may alternatively be distinguished by using different colors, different shapes, or the like, so that the user can visually distinguish between the two regions, and conveniently perform corresponding operations on the two regions, further improving transaction efficiency of the electronic device.

As shown in FIG. 3B, the GUI includes a first region (which may also be referred to as a region A) and a second region (which may also be referred to as a region B), and may further include a dock bar 304 and a status bar 305. The region A displays a page 1 of the home screen. Because a size of the touchscreen of the electronic device is fixed, compared with the controls on the page 1 in FIG. 2A, controls on the page 1 displayed in the region A become smaller in size. A size of the region A and a size of the region B may be the same, so that the user can perform an operation conveniently. In some other embodiments of this application, the size of the region A and the size of the region B may alternatively be different. For example, a to-be-moved app icon is in the region A, and a target region to which the icon is to be moved is the region B. In this case, the size of the region A may be smaller than that of the region B. In this way, the user moves the app icon to the region B more conveniently and quickly, that is, processing efficiency of the electronic device is further improved. For another example, the electronic device may determine the sizes of the region A and the region B based on a default setting or by receiving manual input of the user. The size of the region A may be smaller than the size of the region B. That is, the electronic device considers, by default, that the region A is a region from which an app icon is selected, and the region B is a target region to which the icon is to be moved. According to the invention, the first region and the second region further include home screen indicators, for example, a home screen indicator 307 and a home screen indicator 308 in FIG. 3B. These home screen indicators are used to indicate specific positions, of pages displayed in the first region and the second region, on the home screen, to facilitate viewing by the user.

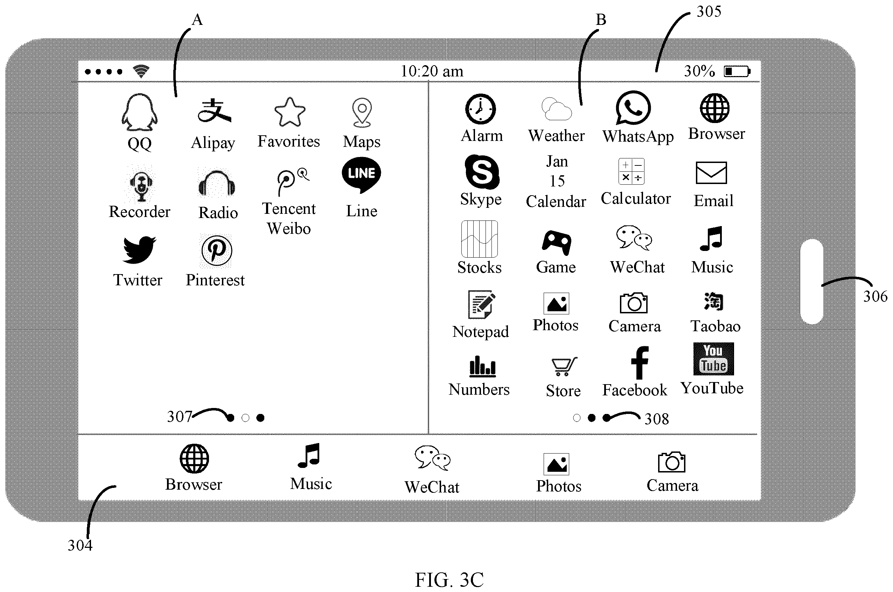

In some embodiments of this application, as shown in FIG. 3C, when the electronic device detects a touch event (for example, the touch event may be a leftward flick gesture 309) specific to the region A and performed by the finger 301 of the user, in response to the touch event, a page 2 of the home screen is displayed in the region A of the touchscreen (the originally displayed page 1 is not displayed any longer), and content displayed in the region B may remain unchanged. This is because the foregoing touch event acts on a position, corresponding to the region A, on the touchscreen, but does not act on another position, corresponding to the region B, on the touchscreen. In some other embodiments of this application, in response to the foregoing touch event, the page 2 of the home screen is displayed in the region A of the touchscreen, and the page 2 may also be displayed in the region B.

In FIG. 3C, the home screen indicator 307 in the region A indicates that a page currently displayed in the region A is the page 2, and the home screen indicator 308 in the region B indicates that a page currently displayed in the region B is the page 1. In some other embodiments of this application, the finger 301 of the user may also perform a touch operation on the page in the region B. For example, the finger 301 of the user makes a leftward flick gesture on the touchscreen corresponding to the region B. In this case, in response to the gesture, the page 2 is displayed in the region B.

It can be understood that when detecting a touch event performed by a finger of the user in the region A, the electronic device may also detect another touch event performed by another finger of the user in the region B. The electronic device may perform different processing on the two different touch events. For example, in response to the touch event in the region A, the electronic device changes a page displayed in the region A to another page; and in addition, in response to the another touch event in the region B, the electronic device changes a page displayed in the region B to another page.

In some other embodiments of this application, the electronic device may further include a home screen key 306. The home screen key 306 is configured to perform an operation, such as quickly returning from a GUI of an app to a page of the home screen, and may be further configured to exit the GUI for editing the home screen, that is, a first page and a second page shown in FIG. 3B are not displayed on the touchscreen.

Both the region A and the region B are used to display the home screen. Therefore, when a control layout of a page of the home screen changes, a control layout of the page, of the home screen, displayed in the region A also changes accordingly. Likewise, a control layout of the page, of the home screen, displayed in the region B also changes. For example, if a position of an app icon on the page 1 in the region A changes, a position of a same app icon on the page 1 in the region B also changes, that is, to be the same as the position of the app icon in the region A. In other words, a page displayed in the region A and a page displayed in the region B are mappings, of pages of the home screen, in these regions, and a control layout change of a page in any region (for example, a position of an app icon on the page changes) may result in a same change of a page in the other region, that is, a control layout of the page of the home screen changes. In some embodiments of this application, the region A and the region B may be distinguished by using different colors, different shapes, or the like, so that the user can distinguish between the two regions visually.

The electronic device detects a first touch event specific to the first region and performed by the user. The first touch event may be specific to an app icon of a first application in the first region, a start touch point of the first touch event is in the first region, and an end touch point of the first touch event is in the second region. For example, in some embodiments of this application, the first touch event may be a flick gesture from the region A to the region B, and the flick gesture acts on an app icon.

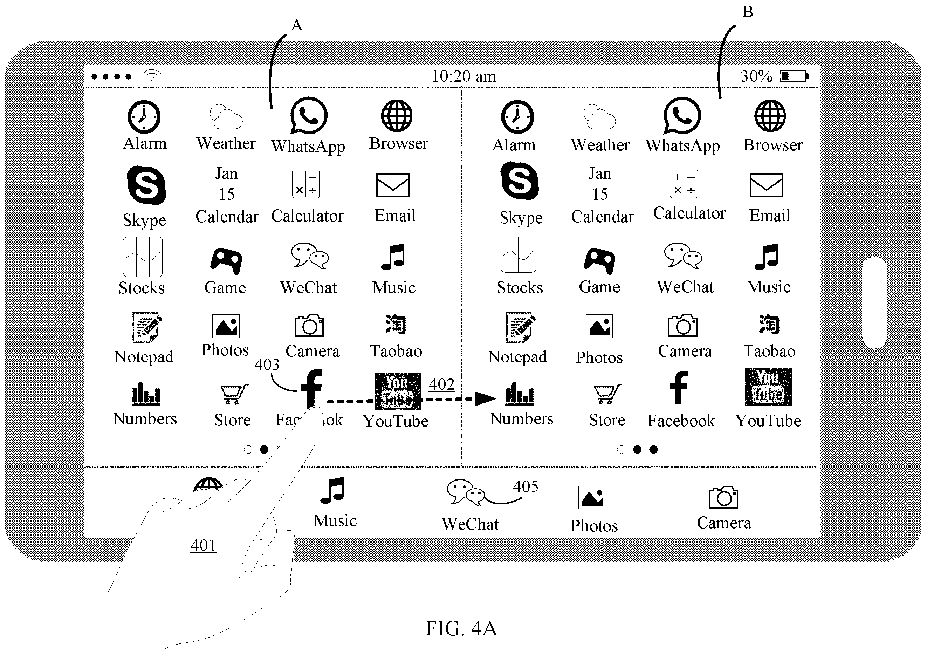

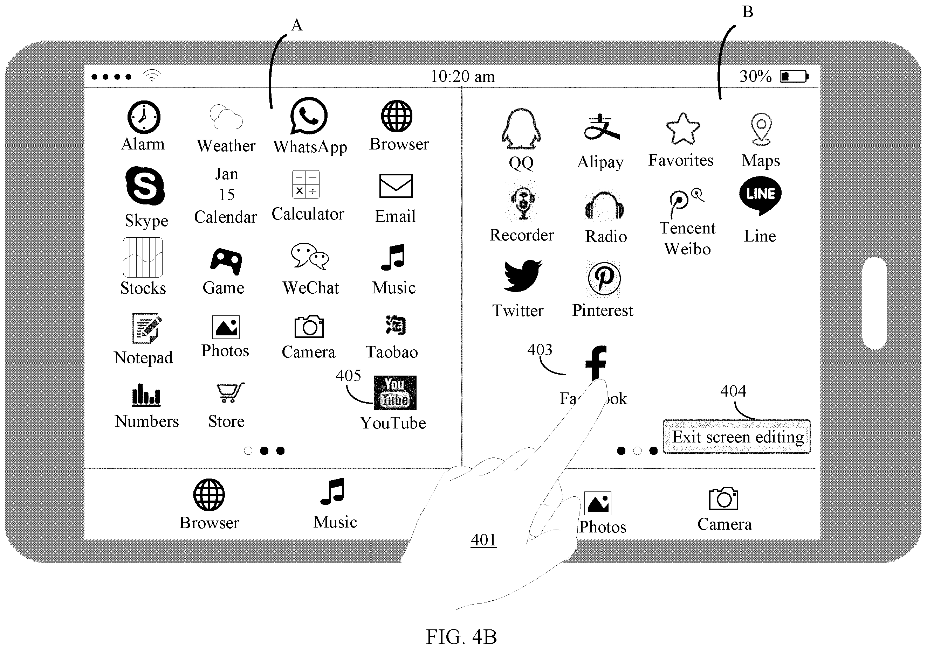

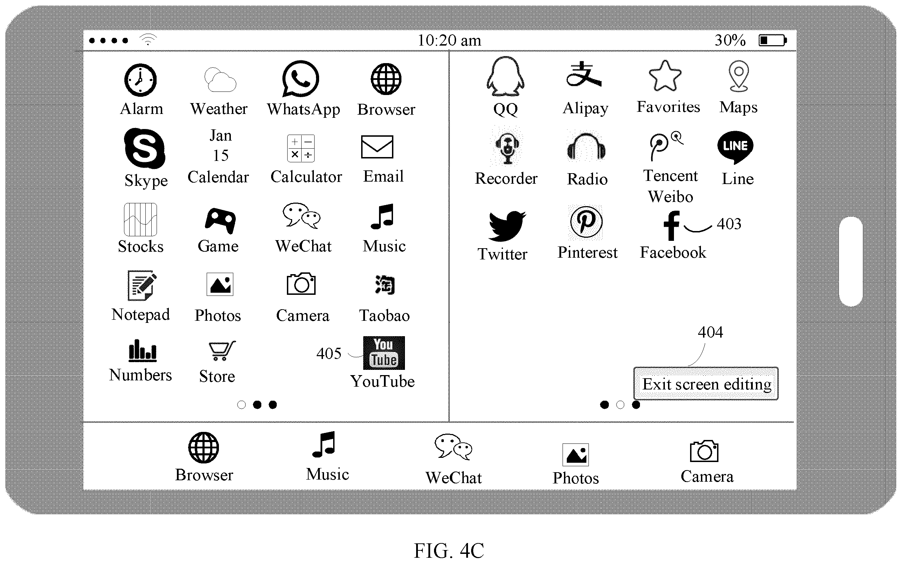

For example, as shown in FIG. 4A, a page 1 of a home screen is displayed in both a region A and a region B. When an electronic device detects a touch event 402 specific to an app icon 403 in the region A on a touchscreen and performed by a finger 401 of a user, in response to the touch event 402, a page 2 may be displayed in the region B, and the page 1 that is originally in the region B is no longer displayed. This is because the page 1 has no space for arranging (placing) the app icon 403, as shown in FIG. 4B. In FIG. 4B, based on the touch event 402, the icon 403 is moved to the region B, and the page 2 is displayed in the region B. Then, in response to termination of the touch event 402, the electronic device arranges the app icon 403 at a corresponding position on the page 2, namely, a position shown in FIG. 4C. In some other embodiments of this application, if the page 1 still has enough space for placing the app icon 403, in response to the touch event 402, the app icon 403 is moved to the region B and arranged (put) at a position on the page 1.

According to the technical solution in the foregoing embodiment, two different (or identical) pages of the home screen may be displayed on one GUI. Therefore, the user may perform a moving operation on a control (such as an app icon, a widget, or a folder icon) on a page between the pages, thereby improving processing efficiency of the electronic device, and also improving user experience of editing the home screen.

In some other embodiments of this application, although the page 1 in the region B has no enough space for placing the app icon 403, in response to the touch event 402, the electronic device may still place the app icon 403 on the page 1 in the region B. However, a last app icon originally displayed on the page 1 is no longer displayed on the page 1, that is, the last app icon is squeezed out, and is no longer an icon placed on the page 1. The app icon squeezed out may be placed on a second page (namely, the page 2) of the home screen. In this way, there is no need to find a position on another page to place the to-be-moved app icon. This further improves transaction efficiency of the electronic device.

In some other embodiments of this application, in the case shown in FIG. 4C, if the finger of the user makes a leftward flick gesture in the region A, in response to the gesture, the electronic device may display the page 2 of the home screen in the region A, and the icon 403 that has been placed may be displayed on the page 2. In other words, after the app icon 403 is placed on the page 2 in the region B, editing related pages (for example, the page 1 and the page 2) of the home screen has been actually completed. In this case, the page 2 displayed in the region A is the same as the edited page 2 in the region B; in addition, the page 1 in the region B is also the same as the page 1 displayed in the region A.

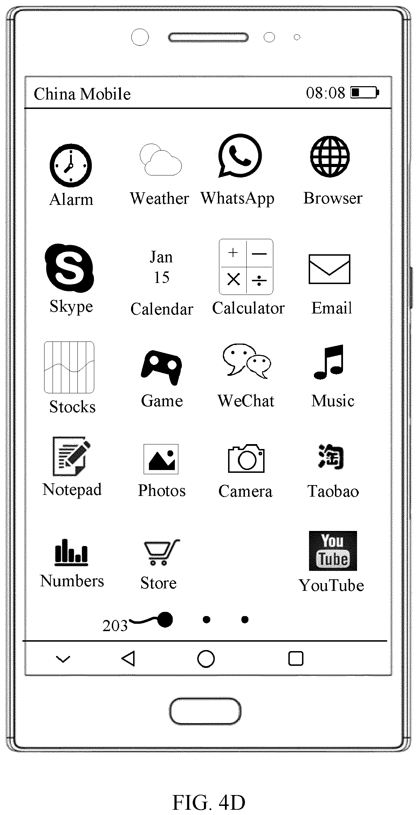

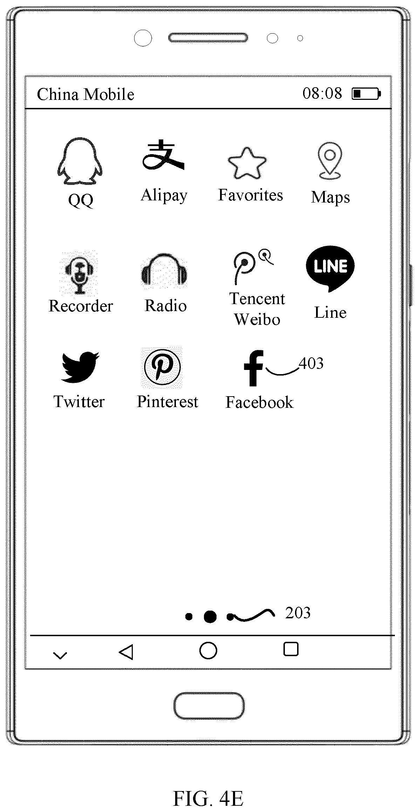

In some other embodiments of this application, a control 404 may be further displayed on the touchscreen. The control 404 indicates that exiting home screen editing may be performed, and a function of the control 404 is equivalent to the home screen key 306 in the foregoing embodiment. For example, after placing an app icon is completed, the finger 401 of the user may tap the control 404. In response to this operation, the region A and the region B may be no longer displayed on the touchscreen of the electronic device; instead, a page of the home screen is displayed, as shown in FIG. 4D. The page 1 of the home screen is displayed in FIG. 4D. On this page, a position at which the app icon 403 is originally placed is empty because the app icon 403 has been placed on the page 2, as shown in FIG. 4E. In some other embodiments of this application, when the user taps the control 404, content that is displayed the last time (for example, a page of the home screen, or a GUI of an application) may alternatively be displayed on the touchscreen. This helps the user perform a specific operation, enhancing an interaction capability of the electronic device, and also improving user experience. In some other embodiments of this application, the control 404 may be displayed on the touchscreen only when the electronic device determines that editing pages in the region A and the region B has been completed (or has been finished). Alternatively, the control 404 is displayed at a particular position on the touchscreen. The particular position may be specifically a position at which a touch operation of the user ends, or the particular position may be a position near the app icon 403 (that is, the control 404 is displayed at a position near the app icon 403). Therefore, the user performs a next operation conveniently, improving user experience. For example, if the electronic device detects that the finger 401 of the user in the touch event 402 leaves the touchscreen (that is, the finger 401 is lifted), a touch position (namely, the particular position) on the touchscreen before the finger 401 of the user leaves the touchscreen may be used as a position at which the control 404 is to be displayed.

Specifically, the touch event 402 may be a gesture that the finger of the user touches and holds the touchscreen or presses the touchscreen, and then quickly or slowly moves from a position in the region A to a position in the region B without leaving the touchscreen; or the touch event 402 may be a gesture that the finger of the user touches the touchscreen, and quickly moves from a position in the region A to a position in the region B without leaving the touchscreen. It can be understood that, in this embodiment of this application, a specific gesture of the first touch event 402 includes but is not limited to the gestures listed above. In the embodiments of this application, "touch and hold" is a term in the art, and indicates a gesture that a finger of a user (or a stylus) taps a touchscreen (or another touch panel), and does not leave the touchscreen within a preset period of time.

In some other embodiments of this application, after the app icon 403 is moved to the region B, an app icon 405 may be automatically displayed at the position at which the app icon 403 is originally displayed, that is, the position may be automatically filled by another icon after the app icon 403 is moved.

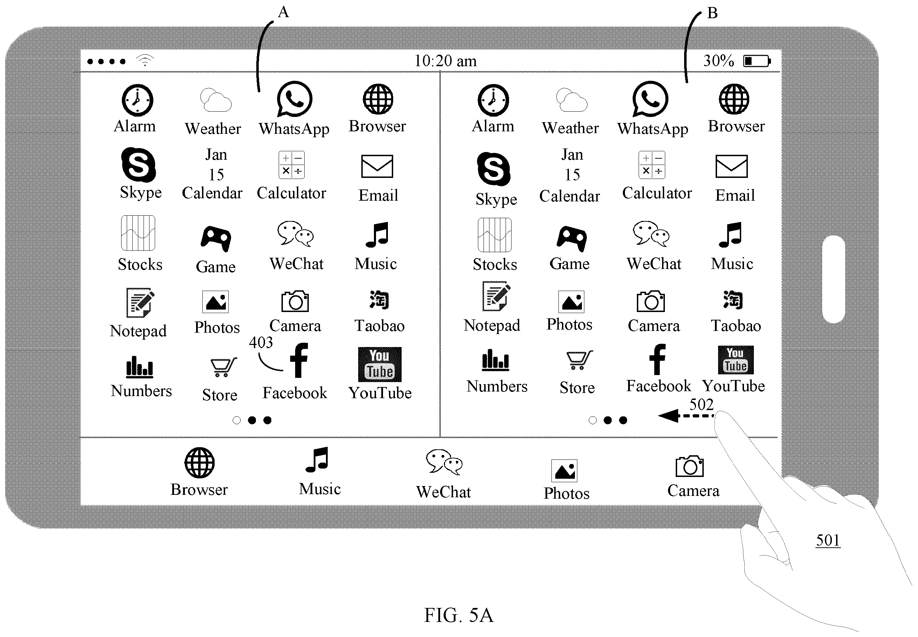

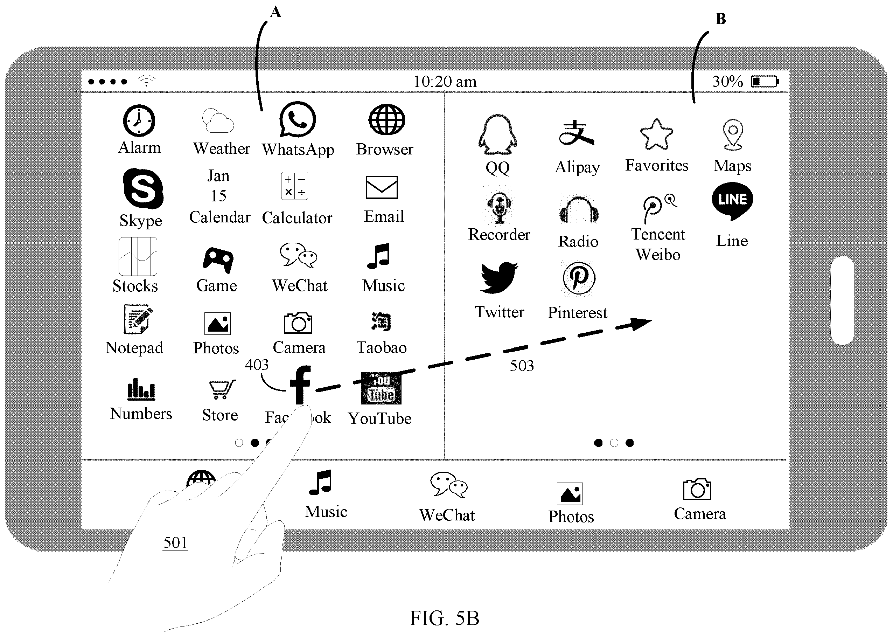

In some other embodiments of this application, a control in the region A may alternatively be moved to a related position in the region B by performing another operation. As shown in FIG. 5A, an electronic device detects a touch event 502 of a user. The touch event 502 may be that a finger 501 of the user makes a leftward flick gesture at a position, corresponding to a region B, on a touchscreen. In response to the touch event 502, a page 2 of a home screen is displayed in the region B, and an originally displayed page 1 is no longer displayed. In this case, an originally displayed page 1 is still displayed in a region A, and the page 2 is displayed in the region B.

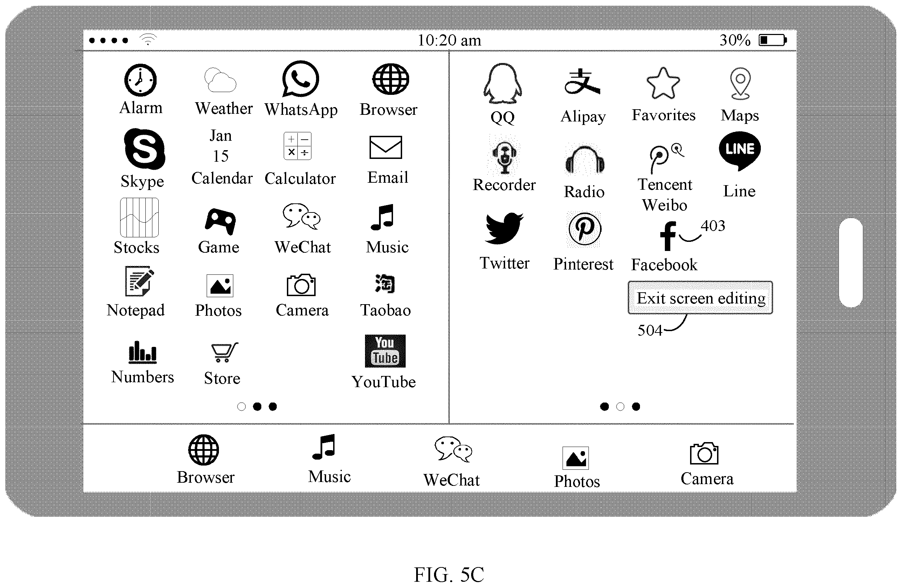

The electronic device detects a touch event 503 performed by the finger 501 of the user on an app icon 403 in the region A. In response to the touch event 503, the electronic device may move the app icon 403 to a position in the region B, as shown in FIG. 5C.

In some other embodiments of this application, after the app icon 403 is displayed at the position in the region B, a control 504 is displayed on the touchscreen. Aposition at which the control 504 is displayed may be near the app icon 403. Therefore, after finishing moving the app icon 403, the user conveniently performs an operation of exiting home screen editing, reducing time and also improving processing efficiency of the electronic device. After the electronic device detects a touch operation performed by the finger 501 of the user on the control 504, the region A and the region B may be no longer displayed on the touchscreen. Instead, a home screen shown in FIG. 4D or FIG. 4E is displayed on the touchscreen, that is, a page of the home screen obtained after editing the home screen is completed is displayed.

In some other embodiments of this application, in the embodiment shown in FIG. 5A to FIG. 5C, the touch event 502 specific to the region B and the touch event 503 specific to the app icon 403 in the region A may alternatively be completed simultaneously. To be specific, the user may perform related touch operations on the touchscreen by using two fingers (for example, a forefinger of a left hand and a forefinger of a right hand) simultaneously. For example, the forefinger of the right hand of the user performs the touch event 502 in the region B, and at the same time, the forefinger of the left hand of the user performs the touch event 503 on the app icon 403 to quickly move the app icon 403 to a related position in the region B.

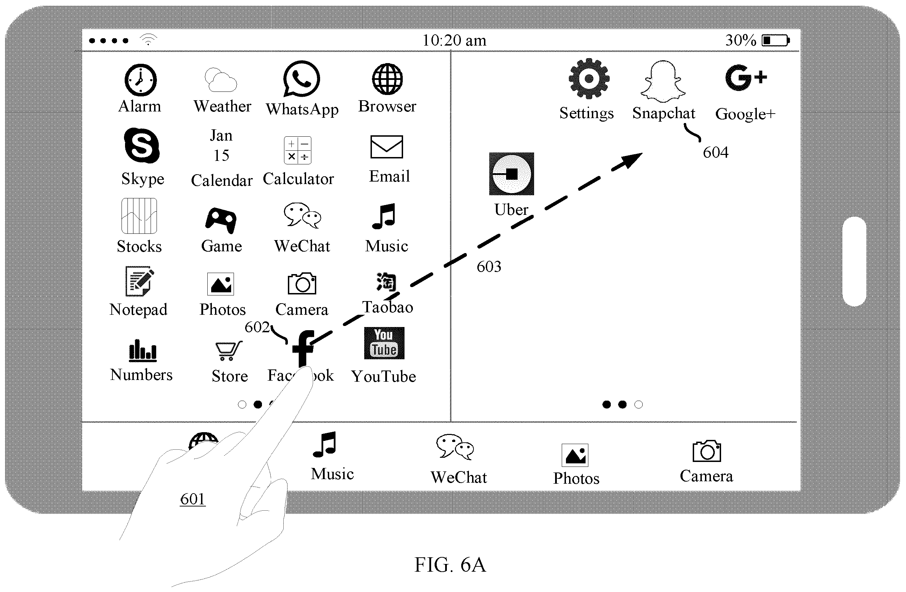

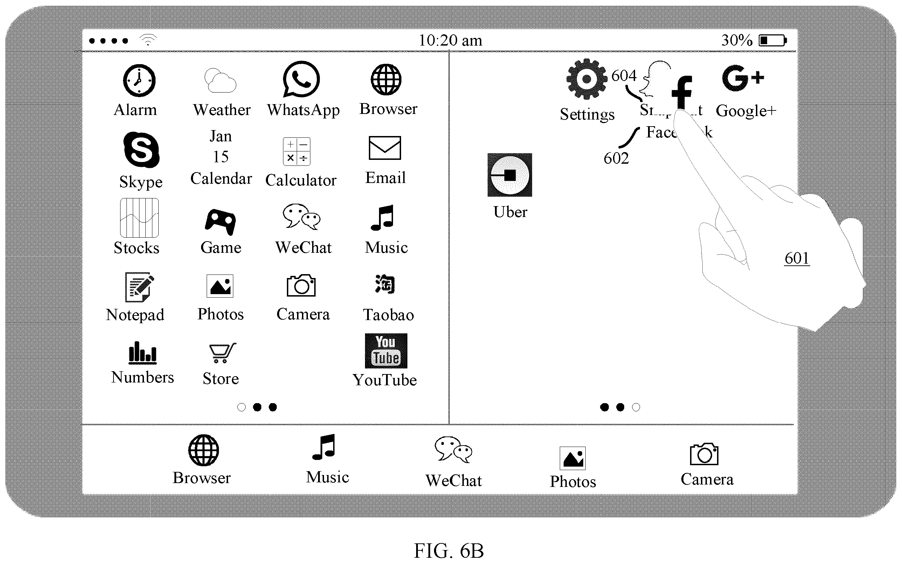

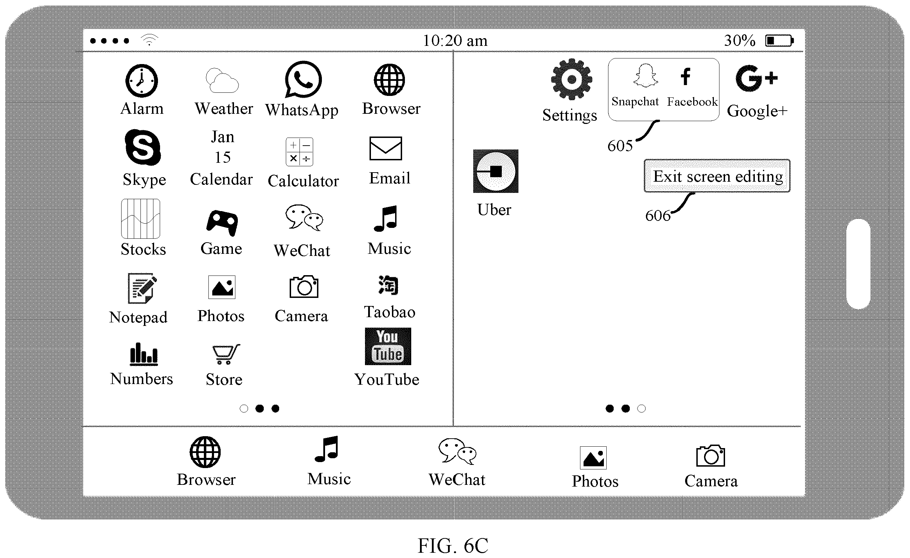

FIG. 6A to FIG. 6C show a folder creation method according to some other embodiments of this application. In FIG. 6A, an electronic device detects a touch event 603 performed by a finger 601 of a user on a touchscreen. In response to the touch event 603, the electronic device may move an app icon 602 from a region A to a region B. If the electronic device determines that the app icon 602 and an app icon 604 that are displayed partially overlap (as shown in FIG. 6B), the electronic device creates a folder icon 605 (as shown in FIG. 6C). The folder icon 605 includes a scaled-down app icon 602 and a scaled-down app icon 604. According to the technical solution in this embodiment, the user may create a folder very quickly, thereby further improving processing efficiency of the electronic device.

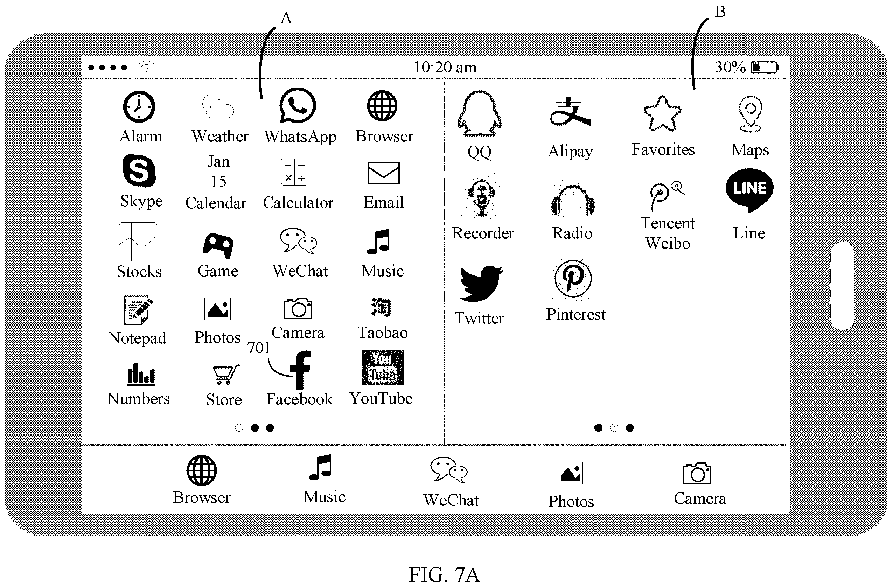

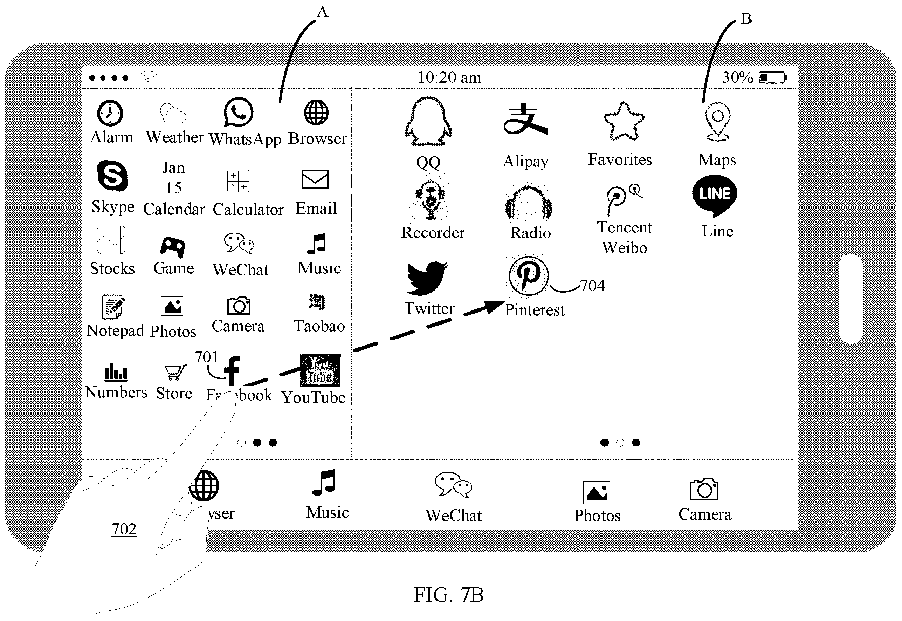

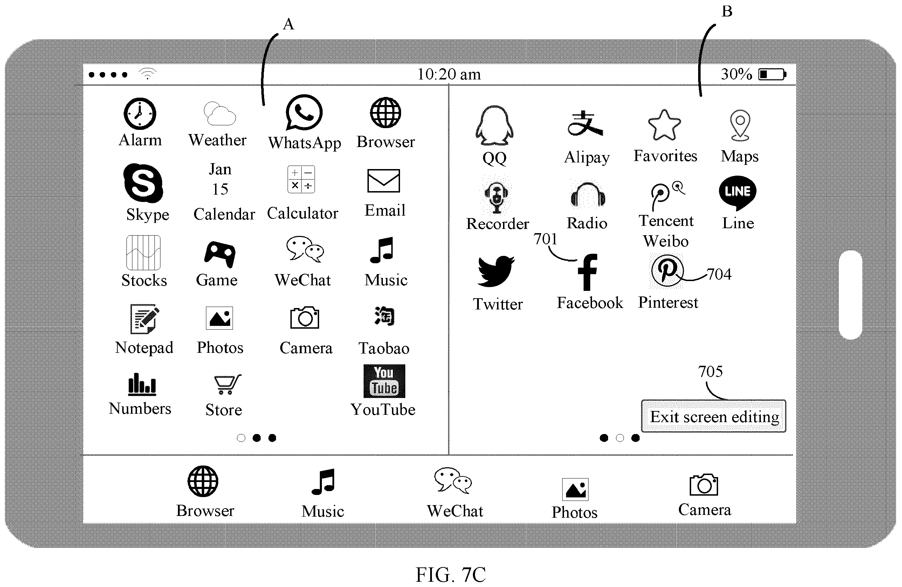

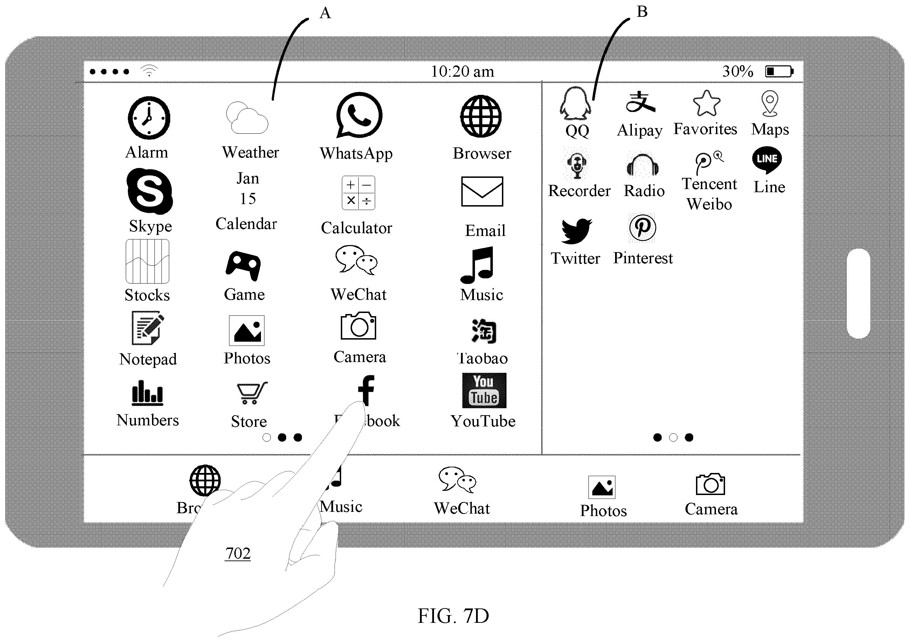

According to the invention, the size of the region A and the size of the region B vary according to touch operation performed by the user on the touchscreen. For example, as shown in FIG. 7A, when an electronic device receives input of a user, a GUI used for editing a home screen is displayed on a touchscreen of the electronic device. The GUI includes a region A and a region B. The two regions may be the same in size. The region A and the region B each display a thumbnail of a page of the home screen. For example, the region A displays a page 1 of the home screen, and the region B displays a page 2 of the home screen. When the electronic device detects a touch event 703 performed by a finger 702 of the user in the region A, in response to the touch event 703, the page 1 in the region A on the touchscreen is scaled down, for example, may be scaled down to a fixed size, and controls on the page 1 may also be scaled down accordingly, as shown in FIG. 7B. Correspondingly, the page 2 in the region B is scaled up, and controls (for example, app icons) on the page 2 may also be scaled up accordingly along with scaling up of the page 2. In this way, a prompt is provided to the user visually, indicating that the electronic device is ready for home screen editing (for example, icon moving). As shown in FIG. 7C, when the finger 702 of the user leaves the touchscreen (that is, the finger is lifted), an app icon 701 is displayed at a position in the region B, and an app icon 704 originally displayed at this position is squeezed out, and is displayed at another position. After placing the app icons is completed, or when the electronic device detects that the finger in the touch event 703 is lifted, the page 1 in the region A may be restored to an original size, as shown in FIG. 7C. Like the foregoing embodiments, a control 705 may be further displayed on the touchscreen, so that the user may exit home screen editing at any time. Optionally, in some other embodiments of this application, which are outside the scope of the claimed invention, when the electronic device detects the touch event 703 performed by the finger 702 of the user in the region A, the page 1 in the region A on the touchscreen may be scaled up, for example, may be scaled up to a fixed size, and the page 2 in the region B may be scaled down to a fixed size accordingly, as shown in FIG. 7D.

In some other embodiments of this application, in response to the touch event 703, the page 1 in the region A may be dynamically scaled down or (in embodiments outside the scope of the claimed invention) scaled up. For example, the page 1 may be scaled down or scaled up to different degrees based on magnitudes of pressure applied by the finger 701 of the user on the touchscreen. For another example, the page 1 may be scaled down or scaled up to different degrees based on duration in which the user is in contact with the touchscreen.

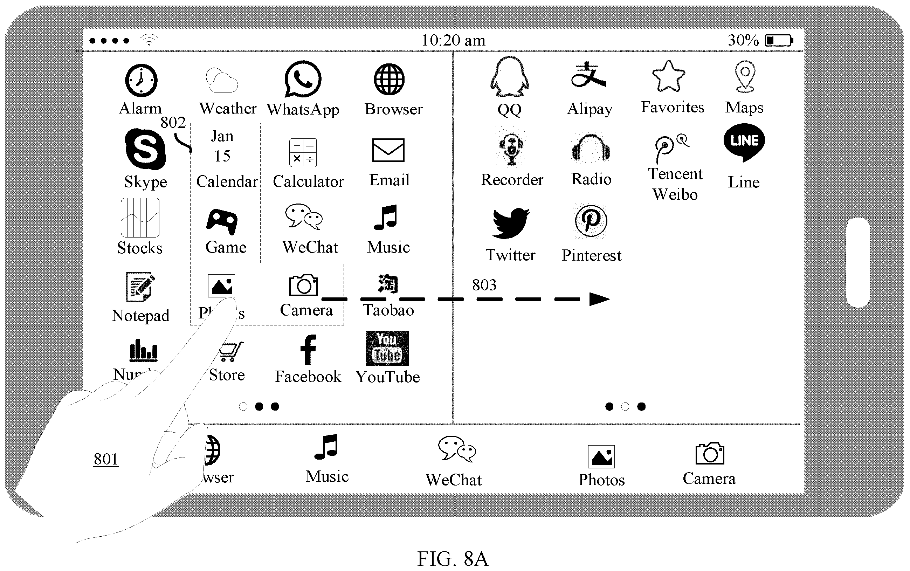

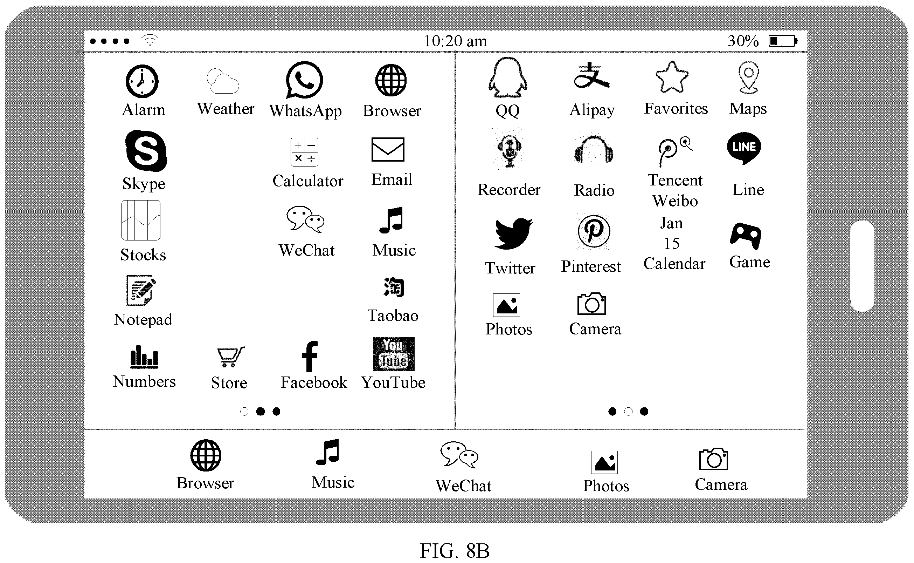

In some other embodiments of this application, the electronic device may further move two or more app icons simultaneously. As shown in FIG. 8A, an electronic device detects selection gestures of a user in a region A. In response to the selection gestures, four app icons in a dashed-line box 802 are selected. The electronic device detects a touch event 803 specific to the four selected app icons in the dashed-line box 803 in the region A and performed by a finger 801 of the user. In response to the touch event 803, the four app icons in the dashed-line box 802 may be displayed in a region B on a touchscreen, and may be arranged and displayed on a page in the region B according to a preset rule, as shown in FIG. 8B.

In some other embodiments of this application, the user may perform selection operations on a plurality of icons on a page in the region A. The plurality of icons are to-be-moved icons. These icons may overlap. The foregoing selection operations may be gestures that the user sequentially taps these icons. When the electronic device detects a touch event (for example, a flick gesture) performed by a finger of the user on these icons, the electronic device moves these icons to the region B. When the finger in the touch event is lifted, these icons may be sequentially arranged on a page in the region B. In the foregoing technical solution, a moving operation is also performed on the plurality of icons, thereby improving efficiency of editing the home screen of the electronic device and also improving user experience.

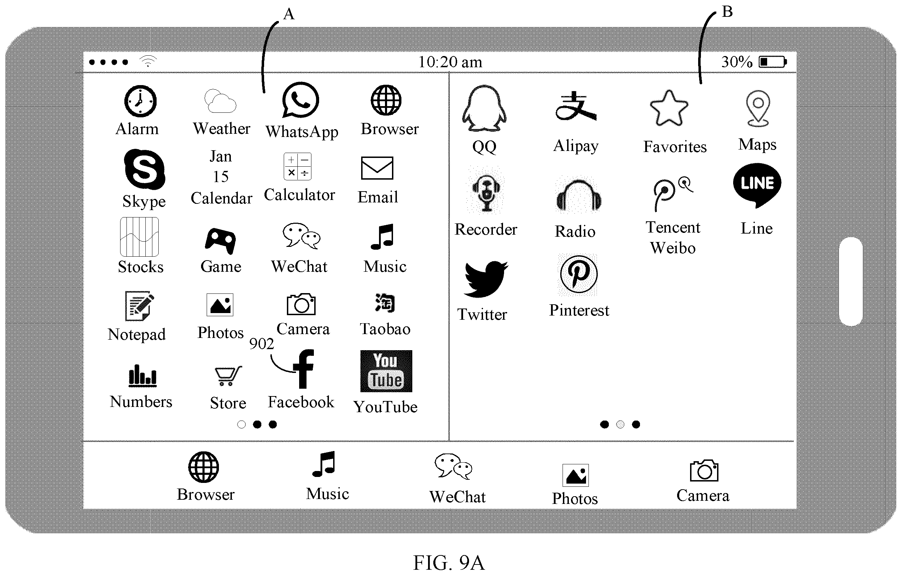

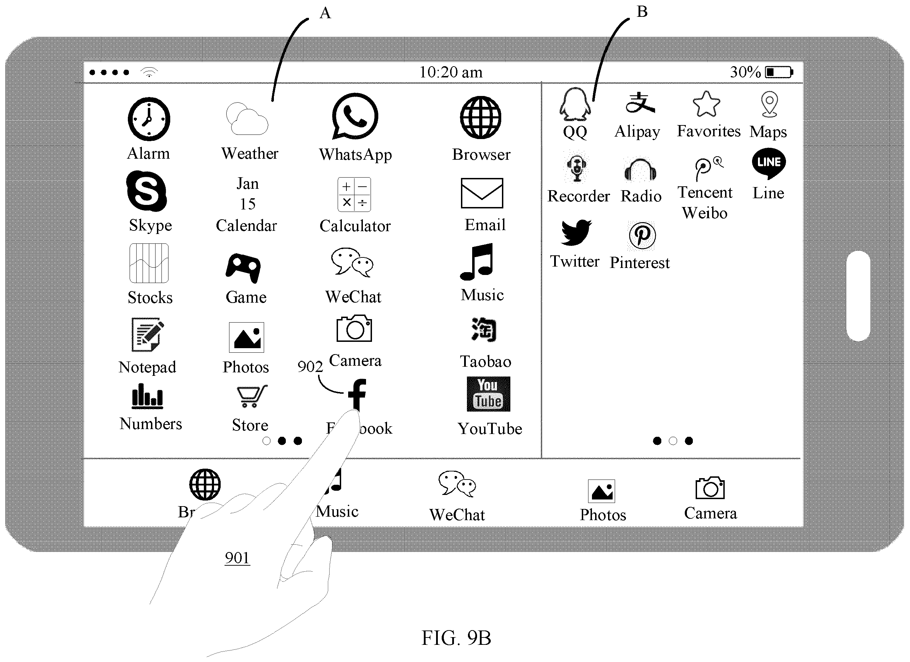

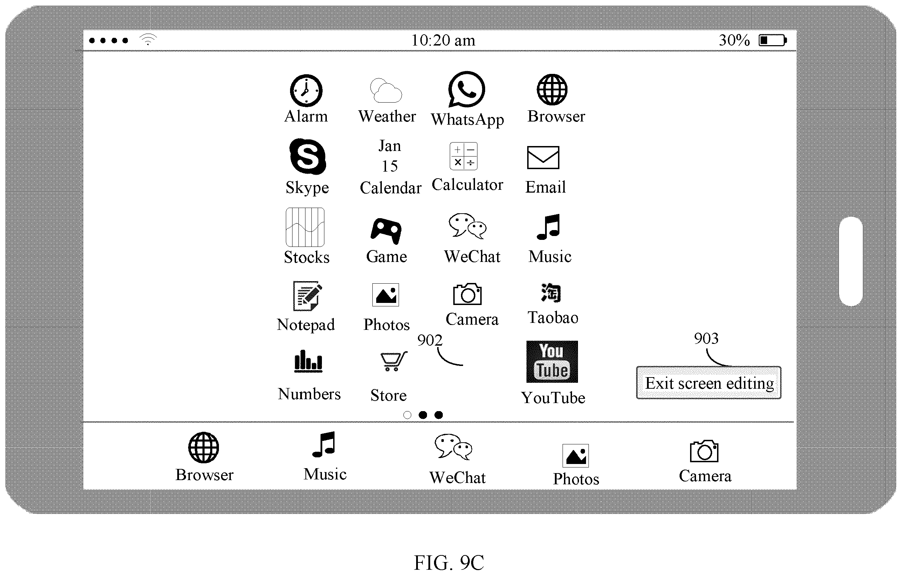

In some other embodiments of this application, the electronic device may further move an app icon on the dock bar, for example, move the app icon 405. The electronic device may move the app icon 405 and place the app icon 405 on a page in the region A or the region B. A specific technical solution is the same as or similar to the technical solutions in the foregoing embodiments, and details are not described herein again. In some other embodiments of this application, which are outside the scope of the claimed invention, if the user needs to move an app icon in the region A to another position on a same page, the user may further perform a moving operation in the region A, and a page displayed in the region B may be no longer displayed. For example, as shown in FIG. 9A, a page 1 in a region A and a page 2 in a region B are displayed on a touchscreen. An electronic device detects a touch event (for example, a tap gesture) specific to an app icon 902 and performed by a finger 901 of a user. In response to the touch event, the page 1 in the region A may be scaled up, and the page 2 in the region B may be scaled down, as shown in FIG. 9B. In this way, the user may conveniently select a to-be-moved app icon on the page displayed in the region A, thereby further improving processing efficiency of the electronic device. Optionally, the page 2 in the region B may be scaled down until the page 2 is no longer displayed, as shown in FIG. 9C. In FIG. 9C, the page 1 in the region A may be displayed at a middle position of the touchscreen, and the page 2 in the region B is no longer displayed on the touchscreen. In this way, the user may focus on where to place the app icon 902 on the page 1. In some other embodiments of this application, after placing the app icon 902 is completed, the region B may be displayed on the touchscreen again. In addition, the page 2 in the region B may be restored to an original display size, that is, a size of the page 2 in the region B is the same as a size of the page 1 in the region A again, as shown in FIG. 9A.

According to the invention, in response to the touch event 903, the page 1 in the region A is also scaled down, and the page in the region B is scaled up. In this way, the user conveniently moves a to-be-moved app icon in the region A to the scaled-up page, thereby further improving processing efficiency of the electronic device. After the app icon is arranged on the page in the region B, the page 1 and the page 2 may be restored to the original display size, as shown in FIG. 9A.

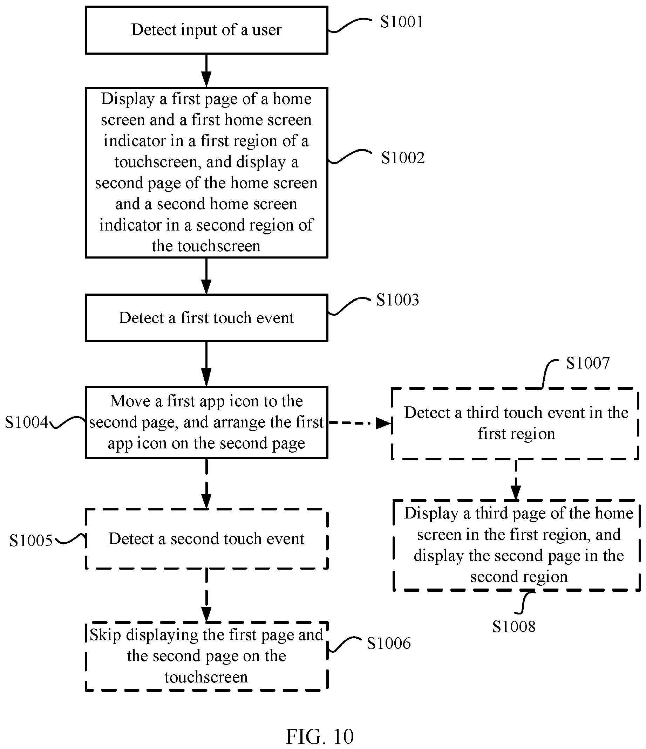

With reference to the technical solutions in the foregoing embodiments and corresponding drawings, an embodiment of the invention provides a home screen editing method. The method is, in accordance with the claimed invention, implemented in an electronic device with a touchscreen (for example, a tablet computer). As shown in FIG. 10, the method includes the following steps.

Step S1001: The electronic device detects input of a user. The input may be a touch operation performed by the user on the touchscreen of the electronic device, or may be a press operation (for example, a press-and-hold operation on a home screen key 204) performed by the user on a physical key of the electronic device. The input may alternatively be a touch event performed by the user on a control in a Settings menu, where the control is used to enable or disable a home screen editing function. The input may alternatively be voice input. For example, a microphone 114 of an electronic device 100 collects voice of the user, and the voice is processed and converted into voice input. The electronic device 100 may recognize the voice input, and then may execute an instruction corresponding to the voice input. It can be understood that the foregoing input is not specifically limited in this embodiment of this application.

Step S1002: In response to the input, display a first page of a home screen and a first home screen indicator in a first region of the touchscreen, and display a second page of the home screen and a second home screen indicator in a second region of the touchscreen, where the first home screen indicator is used to indicate a position of the first page on the home screen, and the second home screen indicator is used to indicate a position of the second page on the home screen. For example, the first home screen indicator may be the home screen indicator 307 in FIG. 3B, and the second home screen indicator may be the home screen indicator 308 in FIG. 3B. For example, the first page may be a page 1 of the home screen, and the second page may be a page 2 of the home screen. The first page and the second page may alternatively be two identical pages of the home screen, as shown in FIG. 4A. The first page may be on a left side of the touchscreen, the second page may be on a right side of the touchscreen, and a size of the first page may be the same as a size of the second page, as shown in FIG. 5A. In addition, a status bar and a dock bar may be further displayed on the touchscreen, as shown in FIG. 4A. In some other embodiments of this application, a size of the first region and a size of the second region may be the same or different.

Step S 1003: The electronic device detects a first touch event, where the first touch event is a gesture specific to a first app icon on the first page.

Step S 1004: In response to the first touch event, the electronic device moves the first app icon to the second page, and arranges the first app icon on the second page.

The first touch event includes a touch-and-hold gesture specific to the first application icon and may include a flick gesture from the first region to the second region. In response to the touch-and-hold gesture, the first page is scaled down, and the second page is scaled up. In response to the flick gesture, the electronic device moves the first app icon to the second page, and arranges the first app icon on the second page.

According to the technical solution in the foregoing embodiment, two different (or identical) pages of the home screen may be displayed on one GUI. Therefore, the user may perform a moving operation on a control (such as an app icon, a widget, or a folder icon) on a page between the pages, thereby improving processing efficiency of the electronic device, and also improving user experience of editing the home screen.

In some other embodiments of this application, the foregoing method may further include:
Step S1005: The electronic device detects a second touch event.
Step S1006: In response to the second touch event, skip displaying the first page and the second page on the touchscreen.

The second touch event may be a tap gesture specific to a control (for example, a control 404 or a control 504) displayed on the touchscreen. The control is used to exit home screen editing. In response to the second touch event, the first page and the second page are no longer displayed on the touchscreen, because the user has exited home screen editing. Instead, an application GUI is displayed on the touchscreen, or a page of the home screen is displayed on the touchscreen. In some embodiments of this application, the control may be displayed at a position near the first application icon, like the control 504 in FIG. 5C.

In some other embodiments of this application, that the first application icon is arranged on the second page in step S1004 may specifically include: if the first application icon overlaps a second application icon on the second page, creating and displaying, by the electronic device, a folder icon, where the folder icon includes a scaled-down first application icon and a scaled-down second application icon, for example, as shown in FIG. 6B and FIG. 6C, and corresponding embodiments.

In some other embodiments of this application, the foregoing method may further include:
Step S1007: The electronic device detects a third touch event in the first region.
Step S 1008: In response to the third touch event, display a third page of the home screen in the first region, and display the second page in the second region.

In other words, a touch event (for example, a flick gesture) specific to the first region and performed by the user may cause a page change in the first region. For example, the page 1 of the home screen is initially displayed in the first region. In response to the flick gesture, a page displayed in the first region changes to the page 2, and the initially displayed page 1 is no longer displayed. However, at this time, the second page in the second region is not affected, and the initially displayed second page is still displayed.

In some other embodiments of this application, step S1004 specifically includes: in response to the first touch event, scaling up the first app icon, scaling down the first page in the first region, and scaling up the second page in the second region. This facilitates a moving operation of the user.

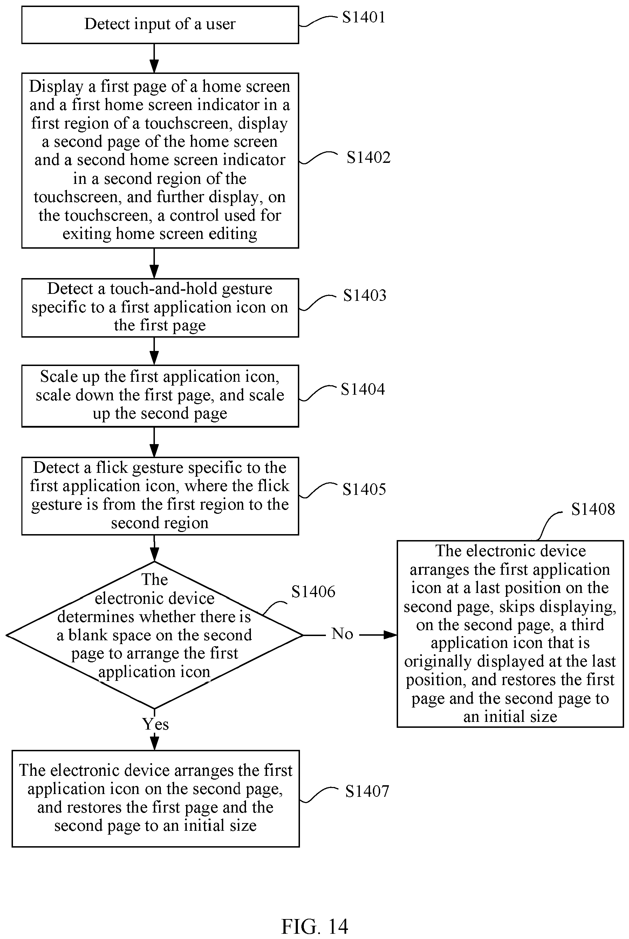

With reference to the technical solutions in the foregoing embodiments and corresponding drawings, as shown in FIG. 14, an embodiment of the invention provides a home screen editing method. The method is, in accordance with the invention, implemented in the foregoing electronic device with the touchscreen. The method specifically includes:
Step S1401: The electronic device detects input of a user on the touchscreen.
Step S1402: In response to the input, display a first page of a home screen and a first home screen indicator in a first region of the touchscreen, display a second page of the home screen and a second home screen indicator in a second region of the touchscreen, and further display, on the touchscreen, a control used for exiting home screen editing, where the first home screen indicator is used to indicate a position of the first page on the home screen, and the second home screen indicator is used to indicate a position of the second page on the home screen.
Step S1403: The electronic device detects a touch-and-hold gesture specific to a first application icon on the first page.
Step S1404: In response to the touch-and-hold gesture, scale up the first application icon, scale down the first page, and scale up the second page.
Step S1405: The electronic device detects a flick gesture specific to the first application icon, where the flick gesture is from the first region to the second region.
Step S 1406: In response to the flick gesture, the electronic device determines whether there is a blank space on the second page to arrange the first application icon. If there is a blank space to arrange the first application icon, step S 1407 is performed. If there is no blank space to arrange the first application icon, step S 1408 is performed.
Step S1407: The electronic device arranges the first application icon on the second page, and restores the first page and the second page to an initial size.
Step S 1408: The electronic device arranges the first application icon at a last position on the second page, skips displaying, on the second page, a third application icon that is originally displayed at the last position, and restores the first page and the second page to an initial size.

With reference to the foregoing embodiments and corresponding drawings, an embodiment of this application, which is outside the scope of the claimed invention, further provides a graphical user interface. The graphical user interface is stored in an electronic device. The electronic device may include a touchscreen, a memory, and one or more processors. The touchscreen is configured to display the graphical user interface, the memory is configured to store the graphical user interface, and the one or more processors are configured to execute one or more computer programs stored in the memory. The graphical user interface may specifically include:
in response to input of a user, displaying a first page of a home screen and a first home screen indicator in a first region of the touchscreen, and displaying a second page of the home screen and a second home screen indicator in a second region of the touchscreen, where the first home screen indicator is used to indicate a position of the first page on the home screen, the second home screen indicator is used to indicate a position of the second page on the home screen, and the input of the user is the same as or similar to the input of the user mentioned in the foregoing embodiments, and details are not described herein again; and
moving, by the electronic device in response to a first touch event, a first app icon to the second page, and arranging the first app icon on the second page, where the first touch event is the same as the first touch event in the foregoing embodiments.

The graphical user interface further includes: in response to the first touch event, scaling up the first app icon, scaling down the first page in the first region, and in addition, scaling up the second page in the second region. This facilitates a moving operation of the user.

In some other embodiments of this application, the graphical user interface may further include:
displaying, on the touchscreen, a control used for exiting home screen editing; and
in response to a second touch event specific to the control and detected by the electronic device, skipping displaying the first page and the second page on the touchscreen.

In some other embodiments of this application, the graphical user interface may further include:
in response to a third touch event, displaying a third page of the home screen in the first region, and displaying the second page in the second region, where the third touch event is a flick gesture, detected by the electronic device, in the first region.

In some other embodiments of this application, in response to the first touch event, the first application icon is scaled up, the first page is scaled down, and the second page is scaled up.

In some other embodiments of this application, the control is displayed at a position near the first application icon.

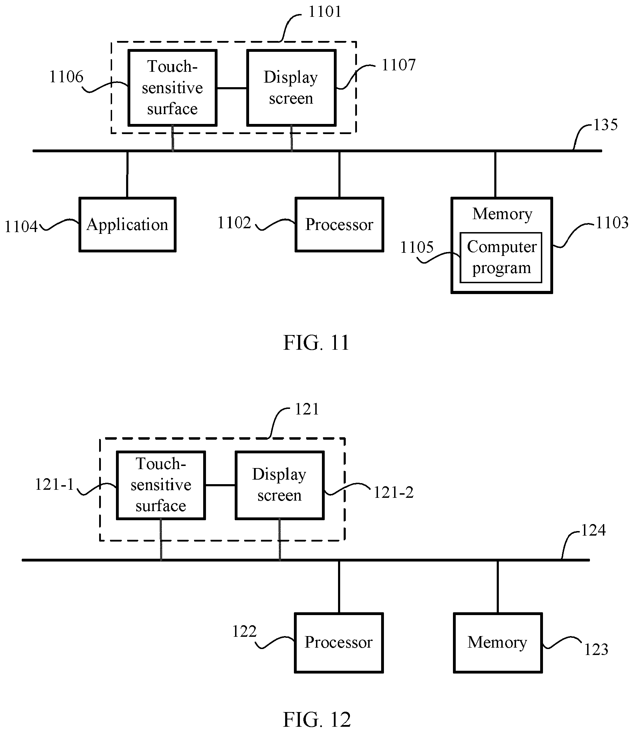

As shown in FIG. 11, an embodiment of the invention further provides an electronic device. The electronic device includes a touchscreen 1101, one or more processors 1102, a memory 1103, a plurality of applications 1104, and one or more computer programs 1105. The touchscreen 1101 includes a touch-sensitive surface 1106 (for example, a touch panel) and a display 1107. The one or more computer programs are stored in the memory, and the one or more computer programs 1105 include an instruction. When the instruction is executed by the electronic device, the electronic device is enabled to perform the methods in FIG. 10, FIG. 14, and corresponding embodiments. Details are not described herein again.

As shown in FIG. 12, another embodiment of this application further provides an electronic device. The electronic device may include a touchscreen 121, a processor 122, and a memory 123, and further includes one or more communications buses 124 connecting the foregoing components. The touchscreen may include a touch-sensitive surface 121-1 and a display screen 121-2. The electronic device may be configured to perform the technical solutions in the methods of the foregoing embodiments and in the drawings.

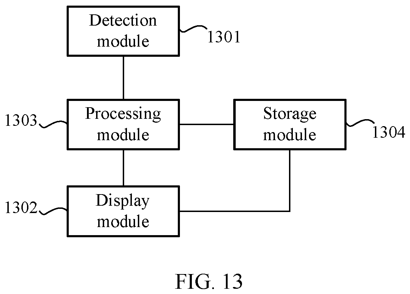

As shown in FIG. 13, another embodiment of this application further provides an apparatus for editing a home screen. The apparatus may include a detection module 1301, a display module 1302, a processing module 1303, and a storage module 1304. The display module 1302 is connected to the processing module 1303 and the storage module 1304, and is configured to display a dock bar, a status bar, various graphical user interfaces, for example, the pages of the home screen in the foregoing embodiments, and the like. The detection module 1301 is connected to the processing module 1302, and is configured to check for a touch event performed by a user in the foregoing apparatus. The processing module 1303 is configured to: receive a touch event detected by the detection module 1301, and execute a specific instruction in response to the touch event. The storage module 1304 is configured to store various data, including the graphical user interfaces displayed in the display module 1302.

The display module 1302 may be a display screen, the detection module 1301 may be a touch panel, the storage module 1304 may be a nonvolatile memory, and the processing module 1303 may be a processor or a controller, for example, may be a central processing unit, a general-purpose processor, a digital signal processor, an application-specific integrated circuit, a field programmable gate array or another programmable logic device, a transistor logic device, a hardware component, or any combination thereof.

The apparatus shown in FIG. 13 may perform the technical solutions shown in the foregoing embodiments and the drawings, and details are not described herein again.

It should be noted that, in the embodiments of this application, unit division is an example, and is merely logical function division. In actual implementation, another division manner may be used. Functional units in the embodiments of the present invention may be integrated into one processing unit, or each of the units may exist alone physically, or two or more units are integrated into one unit. For example, in the foregoing embodiments, a first obtaining unit and a second obtaining unit may be one unit, or may be different units. The integrated unit may be implemented in a form of hardware, or may be implemented in a form of a software functional unit.

In the foregoing embodiments, the word "tap" is opposite to the word "press". To be specific, "tap" indicates a gesture that a finger of a user lightly touches a touchscreen (or another touch panel); "press" indicates a gesture that a finger of a user touches a touchscreen (or another touch panel), and then applies pressure on the touchscreen, where the pressure may be detected by a related sensor (for example, a pressure sensor) disposed in the touchscreen. In addition, a tap may be a tap event, or may be a double tap event, or the like.

According to the context, the term "when" used in the foregoing embodiments may be interpreted as a meaning of "if", "after", "in response to determining", or "in response to detecting". Similarly, according to the context, the phrase "when ... is determined" or "if (a stated condition or event) is detected" may be interpreted as a meaning of "when it is determined that" or "in response to determining", or "when (a stated condition or event) is detected" or "in response to detecting (a stated condition or event)".

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instruction is loaded and executed on a computer, the procedures or the functions according to the embodiments of this application are all or partially generated. The computer may be a general-purpose computer, a special-purpose computer, a computer network, or another programmable apparatus. The computer instruction may be stored in a computer-readable storage medium or transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

## Claims

1. A home screen editing method, wherein the method is implemented in an electronic device with a touchscreen, and the method comprises:
detecting (S1001, S1401), by the electronic device, input of a user;
in response to the input, displaying (S1002, S1402) a first page of a home screen and a first home screen indicator (307) in a first region of the touchscreen, and displaying a second page of the home screen and a second home screen indicator (308) in a second region of the touchscreen, wherein the first home screen indicator is used to indicate a position of the first page on the home screen, and the second home screen indicator is used to indicate a position of the second page on the home screen;
detecting (S1003, S1403, S1405), by the electronic device, a first touch event (402, 503, 603), wherein the first touch event is a gesture specific to a first application icon (403, 602, 902) on the first page; and
in response to the first touch event, determining (S1406), by the electronic device, whether there is a blank space on the second page to arrange the first application icon; and
when the electronic device determines that there is a blank space on the second page, moving (S1004, S1407), by the electronic device in response to the first touch event, the first application icon to the second page, and arranging (S1004, S1407)
the first application icon on the second page;
**characterised by:**
the first touch event comprising a touch-and-hold gesture specific to the first application icon;
and
in response to the touch-and-hold gesture, scaling (S1404) down the first page and scaling up the second page at the same time.

2. The method according to claim 1, wherein the method further comprises:
displaying, on the touchscreen, a control (404, 504, 606, 705) used for exiting home screen editing;
detecting (S1005), by the electronic device, a second touch event specific to the control; and
in response to the second touch event, skipping (S1006) displaying the first page and the second page on the touchscreen.

3. The method according to claim 2, wherein the first touch event further comprises a flick gesture from
the first region to the second region; and
the moving, by the electronic device in response to the first touch event, the first application icon to the second page specifically comprises:
in response to the flick gesture, moving, by the electronic device, the first application icon to the second page, and arranging the first application icon on the second page.

4. The method according to claim 3, wherein the method further comprises: restoring the first page to a previous size and displaying the first page, and restoring the second page to a previous size and displaying the second page.

5. The method according to claim 2 or 3, wherein the control is displayed at a position near the first application icon.

6. The method according to any preceding claim, wherein the arranging the first application icon on the second page specifically comprises:
if the first application icon overlaps a second application icon (604) on the second page, creating and displaying, by the electronic device, a folder icon (605), wherein the folder icon comprises a scaled-down first application icon and a scaled-down second application icon.

7. The method according to any preceding claim, wherein the method further comprises:
detecting (S1007), by the electronic device, a third touch event in the first region; and
in response to the third touch event, displaying a third page of the home screen in the first region, and displaying the second page in the second region.

8. The method according to any preceding claim, wherein the method further comprises: in response to the touch-and-hold gesture, scaling up the first application icon.

9. The method according to any preceding claim, wherein
an initial size of the first page is the same as an initial size of the second page; and
a dock bar and a status bar are further displayed on the touchscreen.

10. An electronic device, comprising a touchscreen (1101), a memory (1103), one or more processors (1102), a plurality of applications (1104), and one or more computer programs (1105), wherein the one or more computer programs are stored in the memory, and when the one or more processors execute the one or more computer programs, the electronic device is enabled to implement the method according to any one of claims 1 to 9.

## Patentansprüche

1. Editierverfahren für einen Startbildschirm, wobei das Verfahren in einer elektronischen Vorrichtung mit einem Berührungsbildschirm implementiert ist und das Verfahren umfasst:
Erfassen (S1001, S1401), durch die elektronische Vorrichtung, einer Eingabe eines Benutzers;
als Reaktion auf die Eingabe, Anzeigen (S1002, S1402) einer ersten Seite eines Startbildschirms und eines ersten Startbildschirmindikators (307) in einem ersten Bereich des Berührungsbildschirms und Anzeigen einer zweiten Seite des Startbildschirms und eines zweiten Startbildschirmindikators (308) in einem zweiten Bereich des Berührungsbildschirms, wobei der erste Startbildschirmindikator verwendet wird, um eine Position der ersten Seite auf dem Startbildschirm zu indizieren, und der zweite Startbildschirmindikator verwendet wird, um eine Position der zweiten Seite auf dem Startbildschirm zu indizieren;
Erfassen (S1003, S1403, S1405), durch die elektronische Vorrichtung, eines ersten Berührungsereignisses (402, 503, 603), wobei das erste Berührungsereignis eine Geste ist, die für ein erstes Anwendungssymbol (403, 602, 902) auf der ersten Seite spezifisch ist; und
als Reaktion auf das erste Berührungsereignis, Bestimmen (S1406), durch die elektronische Vorrichtung, ob es eine leere Stelle auf der zweiten Seite gibt, um das erste Anwendungssymbol anzuordnen; und
wenn die elektronische Vorrichtung bestimmt, dass es eine leere Stelle auf der zweiten Seite gibt, Bewegen (S1004, S1407), durch die elektronische Vorrichtung als Reaktion auf das erste Berührungsereignis, des ersten Anwendungssymbols zu der zweiten Seite und Anordnen (S1004, S1407) des ersten Anwendungssymbols auf der zweiten Seite;
**dadurch gekennzeichnet, dass:**
das erste Berührungsereignis eine Berührungs- und Haltegeste, die für das erste Anwendungssymbol spezifisch ist, umfasst; und
als Reaktion auf die Berührungs- und Haltegeste, Verkleinern (S1404) der ersten Seite und Vergrößern der zweiten Seite zu der gleichen Zeit.

2. Verfahren nach Anspruch 1, wobei das Verfahren ferner umfasst:
Anzeigen, auf dem Berührungsbildschirm, eines Steuerelements (404, 504, 606, 705), das zum Beenden eines Editierens des Startbildschirms verwendet wird;
Erfassen (S1005), durch die elektronische Vorrichtung, eines zweiten Berührungsereignisses, das für das Steuerelement spezifisch ist; und als Reaktion auf das zweite Berührungsereignis, Überspringen (S1006) des Anzeigens der ersten Seite und der zweiten Seite auf dem Berührungsbildschirm.

3. Verfahren nach Anspruch 2, wobei das erste Berührungsereignis ferner eine Schnippgeste von dem ersten Bereich zu dem zweiten Bereich umfasst; und
das Bewegen, durch die elektronische Vorrichtung als Reaktion auf das erste Berührungsereignis, des ersten Anwendungssymbols zu der zweiten Seite spezifisch umfasst:
als Reaktion auf die Schnippgeste, Bewegen, durch die elektronische Vorrichtung, des ersten Anwendungssymbols zu der zweiten Seite und Anordnen des ersten Anwendungssymbols auf der zweiten Seite.

4. Verfahren nach Anspruch 3, wobei das Verfahren ferner umfasst: Wiederherstellen der ersten Seite auf eine vorherige Größe und Anzeigen der ersten Seite und Wiederherstellen der zweiten Seite auf eine vorherige Größe und Anzeigen der zweiten Seite.

5. Verfahren nach Anspruch 2 oder 3, wobei das Steuerelement an einer Position nahe des ersten Anwendungssymbols angezeigt wird.

6. Verfahren nach einem der vorstehenden Ansprüche, wobei das Anordnen des ersten Anwendungssymbols auf der zweiten Seite spezifisch umfasst:
falls das erste Anwendungssymbol ein zweites Anwendungssymbol (604) auf der zweiten Seite überlappt, Erstellen und Anzeigen, durch die elektronische Vorrichtung, eines Ordnersymbols (605), wobei das Ordnersymbol ein verkleinertes erstes Anwendungssymbol und ein verkleinertes zweites Anwendungssymbol umfasst.

7. Verfahren nach einem der vorstehenden Ansprüche, wobei das Verfahren ferner umfasst: Erfassen (S1007), durch die elektronische Vorrichtung, eines dritten Berührungsereignisses in dem ersten Bereich; und
als Reaktion auf das dritte Berührungsereignis, Anzeigen einer dritten Seite des Startbildschirms in dem ersten Bereich und Anzeigen der zweiten Seite in dem zweiten Bereich.

8. Verfahren nach einem der vorstehenden Ansprüche, wobei das Verfahren ferner umfasst: als Reaktion auf die Berührungs- und Haltegeste, Vergrößern des ersten Anwendungssymbols.

9. Verfahren nach einem der vorstehenden Ansprüche, wobei eine anfängliche Größe der ersten Seite die gleiche wie eine anfängliche Größe der zweiten Seite ist; und eine Dockleiste und eine Statusleiste ferner auf dem Berührungsbildschirm angezeigt werden.

10. Elektronische Vorrichtung, die einen Berührungsbildschirm (1101), einen Speicher (1103), einen oder mehrere Prozessoren (1102), eine Vielzahl von Anwendungen (1104) und ein oder mehrere Computerprogramme (1105) umfasst, wobei das eine oder die mehreren Computerprogramme in dem Speicher gespeichert sind und, wenn der eine oder die mehreren Prozessoren das eine oder die mehreren Computerprogramme ausführen, die elektronische Vorrichtung aktiviert wird, um das Verfahren nach einem der Ansprüche 1 bis 9 zu implementieren.

## Revendications

1. Procédé de modification d'écran d'accueil, dans lequel le procédé est mis en oeuvre dans un dispositif électronique ayant un écran tactile, et le procédé comprend :
la détection (S1001, S1401), par le dispositif électronique, d'une entrée d'un utilisateur ;
en réponse à l'entrée, l'affichage (S1002, S1402) d'une première page d'un écran d'accueil et d'un premier indicateur d'écran d'accueil (307) dans une première région de l'écran tactile, et l'affichage d'une deuxième page de l'écran d'accueil et d'un second indicateur d'écran d'accueil (308) dans une seconde région de l'écran tactile, dans lequel le premier indicateur d'écran d'accueil est utilisé pour indiquer une position de la première page sur l'écran d'accueil, et le second indicateur d'écran d'accueil est utilisé pour indiquer une position de la deuxième page sur l'écran d'accueil ;
la détection (S1003, S1403, S1405), par le dispositif électronique, d'un premier événement tactile (402, 503, 603), dans lequel le premier événement tactile est un geste spécifique à une première icône d'application (403, 602, 902) sur la première page ; et
en réponse au premier événement tactile, la détermination (S1406), par le dispositif électronique, du fait de savoir s'il y a un espace vierge sur la deuxième page pour agencer la première icône d'application ; et
lorsque le dispositif électronique détermine qu'il y a un espace vierge sur la deuxième page, le déplacement (S1004, S1407), par le dispositif électronique en réponse au premier événement tactile, de la première icône d'application à la deuxième page, et l'agencement (S1004, S1407) de la première icône d'application sur la deuxième page ;
**caractérisé par** :
le premier événement tactile comprenant un geste de toucher et de maintien spécifique à la première icône d'application ; et
en réponse au geste de toucher et de maintien, la réduction (S1404) de la première page et l'agrandissement de la deuxième page en même temps.

2. Procédé selon la revendication 1, dans lequel le procédé comprend en outre :
l'affichage, sur l'écran tactile, d'une commande (404, 504, 606, 705) utilisée pour quitter la modification d'écran d'accueil ;
la détection (S1005), par le dispositif électronique, d'un deuxième événement tactile spécifique à la commande ; et en réponse au second événement tactile, le saut (S1006) de l'affichage de la première page et de la deuxième page sur l'écran tactile.

3. Procédé selon la revendication 2, dans lequel le premier événement tactile comprend en outre un geste de défilement rapide de la première région à la seconde région ; et le déplacement, par le dispositif électronique en réponse au premier événement tactile, de la première icône d'application à la deuxième page comprend spécifiquement :
en réponse au geste de défilement rapide, le déplacement, par le dispositif électronique, de la première icône d'application à la deuxième page, et l'agencement de la première icône d'application sur la deuxième page.

4. Procédé selon la revendication 3, dans lequel le procédé comprend en outre : la restauration de la première page à une taille précédente et l'affichage de la première page, et la restauration de la deuxième page à une taille précédente et l'affichage de la deuxième page.

5. Procédé selon la revendication 2 ou 3, dans lequel la commande est affichée à une position près de la première icône d'application.

6. Procédé selon l'une quelconque revendication précédente, dans lequel l'agencement de la première icône d'application sur la deuxième page comprend spécifiquement :
si la première icône d'application chevauche une seconde icône d'application (604) sur la deuxième page, la création et l'affichage, par le dispositif électronique, d'une icône de dossier (605), dans lequel l'icône de dossier comprend une première icône d'application réduite et une deuxième icône d'application réduite.

7. Procédé selon l'une quelconque revendication précédente, dans lequel le procédé comprend en outre : la détection (S1007), par le dispositif électronique, d'un troisième événement tactile dans la première région ; et
en réponse au troisième événement tactile, l'affichage d'une troisième page de l'écran d'accueil dans la première région, et l'affichage de la deuxième page dans la seconde région.

8. Procédé selon l'une quelconque revendication précédente, dans lequel le procédé comprend en outre : en réponse au geste de toucher et de maintien, l'agrandissement de la première icône d'application.

9. Procédé selon l'une quelconque revendication précédente, dans lequel une taille initiale de la première page est la même qu'une taille initiale de la deuxième page ; et une barre d'accueil et une barre d'état sont en outre affichées sur l'écran tactile.

10. Dispositif électronique, comprenant un écran tactile (1101), une mémoire (1103), un ou plusieurs processeurs (1102), une pluralité d'applications (1104), et une pluralité de programmes informatiques (1105), dans lequel le ou les programmes informatiques sont stockés dans la mémoire, et lorsque le ou les processeurs exécutent le ou les programmes informatiques, le dispositif électronique est autorisé à mettre en oeuvre le procédé selon l'une quelconque des revendications 1 à 9.
